# EUROPEAN PATENT APPLICATION

(11) **EP 4 357 303 A1**
(43) Date of publication of application: **24.04.2024**
(21) Application number: 22823902.6
(22) Date of filing: 22.04.2022
(51) Int. Cl.: C01G 25/02, C01G 27/02, C04B 35/48, B82Y 30/00, B82Y 40/00

(54) **METHOD FOR PREPARING NANO-ZIRCONIUM/HAFNIUM OXIDE AND METAL NANOPARTICLES**

(30) Priority: 19.06.2021 CN 202110681730
(71) Applicant: Zhao, Yuanyun, Guangdong 523000 (CN)
(72) Inventor: LI, Yanjun, Suzhou, Jiangsu 215500 (CN); ZHAO, Yuanyun, Dongguan, Guangdong 523000 (CN)
(74) Representative: Vitina, Maruta
(86) International application number: PCT/CN2022/088505
(87) International publication number: WO 2022/262417

(57) **Abstract**

The present invention relates to a method for preparing nano ZrO₂/HfO₂ and metal nanoparticles. Firstly, an initial alloy mainly composed of Zr/Hf and Al/Zn is prepared using metal raw materials; Dissolve the initial alloy in a hot alkaline solution to obtain an intermediate solution; Then reduce the alkaline concentration or (and) temperature of the intermediate solution to allow the solid flocculent products containing Zr/Hf to precipitate from the intermediate solution after the concentration or (and) temperature is reduced, resulting in low crystalline nano ZrO₂/HfO₂; By further heat treatment, crystalline nano ZrO₂/HfO₂ was obtained. When precious metal elements are dissolved in the initial alloy, this method can also be used to prepare metal nanoparticle doped nano ZrO₂/HfO₂; After removing the nano ZrO₂/HfO₂ from the composite product, metal nanoparticles were further prepared.

## Description

### TECHNICAL FIELD

The present invention relates to the technical field of nanomaterials, mainly involving a method for preparing nano ZrO₂/HfO₂ and metal nanoparticles.

### BACKGROUND

At present, the main methods for preparing nano HfO₂ and nano ZrO₂ are hydrothermal method, microemulsion method, sol-gel method, coprecipitation method, evaporation method, supercritical synthesis method, etc. However, these methods either require harsh equipment and environmental requirements such as high temperature and high pressure, or require multiple reactants and undergo multi-step reaction processes, which greatly limits the low-cost preparation and widespread application of nano HfO₂ and nano ZrO₂, as well as their corresponding ceramic materials.

Doping metal nanoparticles has a significant impact on the functional application of nano HfO₂ or nano ZrO₂. At present, the commonly used method for doping metal nanoparticles with nano HfO₂ or nano ZrO₂ is the two-step method, which involves preparing nano metal oxides and metal nanoparticles in different reaction systems, and then mechanically mixing the two. These preparation methods are cumbersome, involve a large number of reactants, and require strict reaction conditions.

Although there are many methods for preparing metal nanoparticles, each method has certain limitations, especially the difficulty of large-scale production. Therefore, developing new preparation methods for large-scale production of metal nanoparticles is also of great significance.

### SUMMARY

Based on this, it is necessary to provide a low-cost and large-scale production method for the preparation of nano ZrO₂/HfO₂ to address the above issues; The reactants and process of the preparation method are simple, and the conditions are mild. High purity nano ZrO₂/HfO₂ and metal nanoparticle doped nano ZrO₂/HfO₂ can be prepared from low purity industrial raw materials.

A preparation method for nano ZrO₂/HfO₂, comprising the following steps:
Step 1, providing an initial alloy comprising three types of elements: M, T, and A; wherein the M element comprises at least one of Zr, Hf; the T element comprises at least one of Al, Zn; the A element comprises at least one of O, H, Na, K, Mg, Ca, Li, Si; and the phase composition of the initial alloy mainly comprises a M-T intermetallic compound;
Step 2, react the initial alloy with an alkaline solution with a temperature of *T*₁ and a concentration of the first concentration, so that the initial alloy is dissolved in the alkaline solution to obtain an intermediate solution, where *T*₁ ≥ 75 °C;
Step 3, reduce the alkaline concentration of the intermediate solution described in step 2 to below the second concentration, or lower the temperature of the intermediate solution described in step 2 to below *T*₂ temperature, or simultaneously reduce the alkaline concentration and temperature of the intermediate solution described in step 2 to below the second concentration and below *T*₂ temperature, so that solid products containing M can precipitate from the intermediate solution after the concentration or (and) temperature is reduced; the second concentration is lower than the first concentration, and the temperature of *T*₂ is lower than that of *T*₁;
Step 4, collect the solid products containing M to obtain products mainly composed of nano ZrO₂/HfO₂.

In step 1,
Furthermore, the T element comprises Al; Furthermore, the T element is Al;
Furthermore, the T element comprises Zn; Furthermore, the T element is Zn;
Furthermore, the M element comprises at least one of Zr, Hf; and the meaning of "M" in this manual is equivalent to "Zr/Hf";
Furthermore, the A element comprises at least one of O, H, Si.
Furthermore, the elemental composition of the initial alloy is mainly AₓT_{y}M_{z}, where x, y, and z are the atomic percentage contents of corresponding elements, and 0<x ≤ 15%, 45% ≤ y<95%, and 5% ≤ z<55%;
Furthermore, 0.3%<x≤15%, 45%≤y<94.7%, 5%≤z<54.7%;
Furthermore, 0<x% 10%, 45%≤y<95%, 5%≤z<55%;
Furthermore, 0.05%<x≤10%, 45%≤y<75.95%, 24%≤z<54.95%;
Furthermore, 0.5%<x≤10%, 50%≤y<69.5%, 30%≤z<49.5%;
Furthermore, 1%<x≤10%, 50%≤y<69%, 30%≤z<49%;
Furthermore, 1.5%<x≤10%, 45%≤y<93.5%, 5%≤z<53.5%;
Furthermore, the atomic percentage of A elements in the initial alloy is higher than that in other initial alloy obtained by melting commercially available high-purity T and high-purity M.
Furthermore, the initial alloy is prepared by solidification of a melt containing T, M, A, and a solidification structure comprising a M-T intermetallic compound is formed during the solidification process of the alloy.
Furthermore, in the initial alloy solidification structure, A elements exist in solid solution in M-T intermetallic compounds or in non solid solution form in the initial alloy;
Furthermore, the solidification rate of the initial alloy melt is between 0.01K/s and 10⁷K/s;
Furthermore, the initial alloy is mainly composed of M-T intermetallic compound phases;
Furthermore, the M-T intermetallic compound refers to the phase composition of the intermetallic compound becoming the M-T intermetallic compound phase, that is, the XRD phase analysis result of the M-T intermetallic compound phase is the M-T intermetallic compound phase, and the main stoichiometric relationship of the M-T intermetallic compound phase includes at least one of MT₃, MT₂, M₂T₃, and MT.
Furthermore, the M-T intermetallic compound refers to the phase composition of the intermetallic compound becoming the M-T intermetallic compound phase, that is, the XRD phase analysis result of the M-T intermetallic compound is the M-T intermetallic compound phase; At this point, the M-T intermetallic compound phase can also contain elements other than M and T, such as A elements;
Furthermore, the M-T intermetallic compound comprises at least one of HfAl₃, HfAl₂, Hf₂Al₃, HfAl, ZrAl₃, ZrAl₂, Zr₂Al₃, and ZrAl intermetallic compounds;
Furthermore, the average size of any one dimension in the three-dimensional direction of the initial alloy shape is greater than 4 µm;
Furthermore, the average size of any one dimension in the three-dimensional direction of the initial alloy shape is greater than 10 µm;
Furthermore, the average size of any one dimension in the three-dimensional direction of the initial alloy shape is greater than 15 µm;
Furthermore, the initial alloy is in the form of a powder or a ribbon, and the powder particles or ribbons have a scale of less than 5 mm in at least one dimension in the three-dimensional direction;
Furthermore, the initial alloy powder particles or ribbons have a scale of less than 500 µm in at least one dimension in the three-dimensional direction;
As a preference, the initial alloy powder particles or ribbons have a scale of less than 50 µm in at least one dimension in the three-dimensional direction;
Furthermore, the initial alloy is prepared by melting metal raw materials containing A, T, and M elements, and then solidifying the alloy melt;
Furthermore, the sources of A elements in the initial alloy include at least one of T raw material introduction, M raw material introduction, and introduction during the initial alloy melting process;
Furthermore, when the sources of A elements in the initial alloy include introduction during the initial alloy melting process, the A elements comes from at least one of the detachment of the furnace lining and the smelting atmosphere.
Furthermore, the content of A elements in the T raw material is higher than that in ordinary high-purity T raw materials available on the market; For example, taking Al as an example, the impurity content of commercially available high-purity Al is less than 0.01%, while the weight percentage content of Si in inexpensive industrial low-purity aluminum ingots (such as the grade Al99.00) can be as high as 0.42%, which is converted to an atomic percentage content of 0.4%; Therefore, the present invention can use industrial low-purity aluminum ingots or aluminum raw materials with lower purity than industrial low-purity aluminum ingots;
Furthermore, the content of A elements in the M raw material is higher than that in high-purity M; For example, according to national standards, the weight percentage content of O impurities in industrial grade sponge zirconium (grade HZr-1, and HZr-2) is 0.1%~0.14%, which is converted into atomic percentage content of 0.57%~0.79%; The weight percentage content of H impurities is 0.0125%, which is converted to an atomic percentage content of 1.12%;
The weight percentage content of O impurities in industrial grade sponge hafnium (grade HHf-1) is 0.13%, which is converted into an atomic percentage content of 1.43%; The weight percentage content of H impurities is 0.005%, which is converted to an atomic percentage content of 0.88%; Therefore, the present invention can prepare initial alloys using sponge zirconium/hafnium or zirconium/hafnium raw materials with lower purity than sponge zirconium/hafnium.
When selecting low purity raw materials containing A elements for both T and M raw materials, A elements are simultaneously introduced into the alloy melt, resulting in the initial alloy also containing A elements; For example, ordinary sponge Zr and sponge Hf raw materials contain solid solutions of O and H elements, while industrial Al ingots contain more Si elements, which will result in a certain amount of O, H, and Si elements in the initial alloy;
Furthermore, the A elements also originate from the introduction of atmosphere or furnace lining during the alloy melting process;
During the melting process, elements such as O and H in the atmosphere inevitably enter the melt, and A-type elements contained in the furnace lining of the melting crucible may also enter the melt during the melting process; Thus, the initial alloy contains a significant amount of A elements; One of the key problems that the present invention aims to solve is to use low-purity raw materials to prepare high-purity M containing nano metal oxides even when the alloy melt contains a large amount of A elements, thereby greatly simplifying the production process and reducing raw material costs.
Furthermore, the alloy melting process is carried out in an atmospheric environment;
Furthermore, when the initial alloy is in the form of a ribbon, it can be prepared by a method comprising the melt spinning method;
Furthermore, when the initial alloy is in the form of a powder, a larger initial alloy ingot can be prepared by a casting method, and then crushed into the initial alloy powder.

In step 2,
Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the first concentration of alkaline solution is 5~30mol/L;
As a preference, the concentration of alkali in the first concentration of alkaline solution is 5~15mol/L;
As a preference, the concentration of alkali in the first concentration of alkaline solution is 7~12mol/L;
Furthermore, the alkali in the first concentration alkaline solution that reacts with the initial alloy is an excess dose, and the volume of the first concentration alkaline solution is more than 5 times the volume of the initial alloy, so that the reaction can continue at a higher alkali concentration;
Furthermore, the volume of the first concentration alkaline solution is more than 10 times the initial alloy volume;
Furthermore, the volume of the first concentration alkaline solution is more than 20 times the initial alloy volume;
Furthermore, the reaction temperature of the initial alloy and the first concentration alkaline solution is the temperature of the alkaline solution;
Furthermore, the reaction between the initial alloy and the alkaline solution is carried out under normal or high pressure;
Furthermore, the reaction between the initial alloy and the alkaline solution is carried out in a closed container;
In a closed container, when the pressure inside the container exceeds one atmospheric pressure, it is considered high pressure; Meanwhile, if the gas generated by the reaction inside the container cannot be discharged, additional high pressure can also be formed.

Furthermore, when conducting a reaction in a closed container, the initial alloy and alkali solution are first placed separately in the closed container. When the temperature of the alkali solution reaches the set reaction temperature, the initial alloy is then brought into contact with the alkali solution for the reaction.
Furthermore, in a sealed container, the temperature of the alkaline solution can exceed its boiling point temperature at atmospheric pressure;
Furthermore, the reaction of the initial alloy with the hot alkaline solution is carried out at ambient pressure;
Furthermore, the ambient pressure, is the atmospheric ambient air pressure without the use of a closed container; furthermore, if the container is not tightly closed, although the pressure inside the container is slightly higher than the ambient pressure in a completely open environment, the pressure at this time also falls into the category of ambient pressure as it is also a non-closed environment.
Furthermore, 75°C≤*T*₁≤*T*_{f solution}, wherein the *T*_{f solution} is the boiling point temperature of the solution of the alkali involved in the reaction at ambient pressure;
Furthermore, the reaction is carried out in an atmospheric pressure environment, and atmospheric pressure generally refers to 1 standard atmospheric pressure, wherein the boiling point of the corresponding water is 100°C; when there is an alkali dissolved in the water, the boiling temperature of the aqueous solution of the alkali is higher than 100°C; under 1 standard atmospheric pressure, and the higher the concentration of the alkali is, the higher the boiling point is. For example, the boiling point of *T*_{f solution} for the 5 mol/L NaOH aqueous solution is about 108°C; the boiling point of *T*_{f solution} for the 7 mol/L NaOH aqueous solution is about 112°C; the boiling point of *T*_{f solution} for the 10 mol/L NaOH aqueous solution is about 119°C; the boiling point of *T*_{f solution} for the 12 mol/L NaOH aqueous solution is about 128°C; the boiling point of *T*_{f solution} for the 15 mol/L NaOH aqueous solution is about 140°C; the boiling point of *T*_{f solution} for the 17 mol/L NaOH aqueous solution is about 148°C; the boiling point of *T*_{f solution} for the 20 mol/L NaOH aqueous solution is about 160°C; the boiling point of *T*_{f solution} for the 25 mol/L NaOH aqueous solution is about 175°C; The boiling point of *T*_{f solution} for the 10 mol/L KOH aqueous solution is about 125 °C; the boiling point of *T*_{f solution} for the 12 mol/L KOH aqueous solution is about 136°C; the boiling point of *T*_{f solution} for the 15 mol/L KOH aqueous solution is about 150°C;
Furthermore, 81°C≤*T*₁≤*T*_{f solution}; Furthermore, 91°C≤*T*₁≤*T*_{f solution};
Furthermore, 100°C≤*T₁* ≤*T*_{f solution}; Furthermore, 100°C≤*T₁*≤*T*_{f solution};
Furthermore, 101°C≤*T₁*<*T*_{f soution};
Furthermore, 105°C≤*T₁*<*T*_{f soution};
Furthermore, 101°C≤*T*_{fsoution}-5°C≤*T₁* ≤*T*_{f solution};
Furthermore, 101C≤*T*_{fsoution}-2°C≤*T₁* ≤*T*_{f solution};
As a further preference, the temperature of the alkaline solution is *T_{f solution},* i.e. *T₁* = *T_{f solution}*;
Since the highest temperature to which the reaction solution can be heated at ambient pressure is its boiling point temperature (*T_{f solution}*)*,* when the temperature reaches this temperature and continues to be heated, the temperature of the solution does not increase. When increasing the reaction temperature, a higher boiling point temperature can be achieved by increasing the concentration of the alkaline solution; Therefore, the boiling point temperature is the easiest, simplest, and most accurate to control. Moreover, the reaction time required for the boiling point temperature reaction is also shorter than that required for other temperatures below the boiling point, and the product yield and efficiency are also the highest;
The T elements contain at least one of Al and Zn, which are zwitterionic metals that can react with hot concentrated alkaline solutions to form salts and dissolve in alkaline solutions; For A elements, although they are generally impurity elements in the initial alloy raw material or initial alloy, alkali metals or alkaline earth metals such as Na, K, Mg, Ca, Li are consistent with the cations in the available alkaline solution, and they will also become ions and enter the solution; Under atmospheric pressure, elements such as O and H are also present in alkaline solutions; For Si element, it can also react with hot concentrated alkaline solution and dissolve into the solution; Therefore, both A and T elements can dissolve into the intermediate solution.

The present invention finds that under normal pressure, the Zr and Hf elements in the M-T intermetallic compound can also be dissolved in a hot concentrated alkaline solution when they react with the first concentration of hot concentrated alkaline solution, and this solubility ability is significantly enhanced with the increase of temperature or the concentration of the first alkaline solution. Specifically, at a specific concentration, this dissolution phenomenon is most pronounced when the reaction takes place at atmospheric pressure and occurs at the boiling point temperature *T_{f solution}* of the first concentration of alkaline solution.
Furthermore, the M elements are dissolved in an intermediate solution formed by the reaction between the first concentration of alkaline solution and the initial alloy;
Furthermore, the intermediate solution is mainly in a clear state;
Furthermore, the intermediate solution is mainly in a clear state, which means that elements A, M, and T mainly enter or dissolve in the intermediate solution, and solid substances mainly composed of these elements are hardly observed, resulting in a clear state of the intermediate solution;
Furthermore, under normal pressure, the initial alloy is reacted with a hot alkaline solution with a temperature of *T*₁ and a concentration of the first concentration for a period of time, allowing the initial alloy to dissolve in the alkaline solution to obtain an intermediate solution, where elements A, M, and T are mainly dissolved in the intermediate solution;
Furthermore, the initial alloy is reacted with an alkaline solution of the first concentration for a period of time. The theoretical shortest time required for this reaction is the time when A, M, and T elements are completely dissolved in the alkaline solution of the first concentration;
Furthermore, the reaction time between the initial alloy and the first concentration alkaline solution at *T*₁ temperature is 15s~1h;
Furthermore, the reaction time between the initial alloy and the first concentration alkaline solution at *T*₁ temperature is 15s~9.9min;
Furthermore, the reaction time between the initial alloy and the first concentration alkaline solution at *T*₁ temperature is 15s~4.9min;
Furthermore, the reaction time between the initial alloy and the first concentration alkaline solution at *T*₁ temperature is 15s~1min;
Furthermore, the reaction time between the initial alloy and the first concentration alkaline solution at *T*₁ temperature is 15s~30s;
As a preference, *T*₁=*T*_{f solution} at atmospheric pressure;
Obviously, the higher the *T*₁ temperature, and the thinner the initial alloy thickness or the smaller the particle size, the shorter the required reaction time; On the contrary, the longer the reaction time;
Furthermore, the completion time of the reaction is related to the rate at which the reaction interface advances inward from the initial alloy surface per unit time. The higher the temperature of the alkaline solution, the faster the rate at which the reaction interface advances and the shorter the reaction time.

According to the average advancement rate of the reaction interface and the size of the initial alloy, the minimum reaction time required for the completion of the reactions can be calculated as *t*. For example, when the initial alloy is a ribbon with a thickness of *d,* and the average advancement rate of the reaction interface is *v*, taking into account the fact that the reaction interface advances from the upper and lower surfaces of the ribbon, *t*=0.5*d*/*v*; similarly, when the initial alloy is a granular alloy with a diameter of *d* and the average advancement rate of the reaction interface is *v*, *t*=0.5*d*/*v.*

Furthermore, during the reaction process between the initial alloy and the first concentration of alkaline solution, the reaction interface advances inward from the initial alloy surface is greater than 5µm/min;
For example, when the alkaline concentration is 10mol/L of NaOH, according to the experimental results, the initial alloy ribbon of ZrAl₃ intermetallic compound containing O, H, and Si impurities reacts with the alkaline solution, and the rate of the reaction interface inward from the initial alloy surface is as follows:
When 75°C≤*T₁*≤80°C, the average advancement rate of the reaction interface is about 6µm/min~9µm/min;
When 80°C<*T₁*≤90°C, the average advancement rate of the reaction interface is about 9µm/min~15µm/min;
When 90°C<*T₁*≤100°C, the average advancement rate of the reaction interface is about 15µm/min~30µm/min;
When 100°C<*T₁*≤110°C, the average advancement rate of the reaction interface is about 30µm/min~50µm/min;
When 110°C<*T₁*≤120°C, the average advancement rate of the reaction interface is about 50µm/min~120µm/min;
When 120°C<*T₁*≤*T*_{f solution}, the average advancement rate of the reaction interface is greater than 120µm/min;
Therefore, the initial alloy ribbon of ZrAl₃ intermetallic compounds containing O, H, and Si react with a 10mol/L NaOH solution at boiling point temperature, and the rate at which the initial alloy ribbon thickness decreases is about ~120µm/min, i.e. The initial alloy ribbon with a thickness of 40µm can react on the upper and lower surfaces, and in 10 seconds, almost all of the initial alloy ribbons can be dissolved, resulting in the A, M, and T elements contained in the initial alloy to mainly enter the intermediate solution. Therefore, an initial alloy ribbon with a thickness of 40µm, can be almost completely dissolved in 15 seconds, considering the uneven thickness; For the initial alloy powder with an average particle size of 20µm, considering the uneven particle size, the initial alloy powder can be almost completely dissolved in 10 seconds; Even for the initial alloy ultra coarse powder with a particle size of 5mm, the reaction can be completed in 21 minutes;
After the reaction is completed, the reaction system then reaches equilibrium; At this point, continuing to extend the holding time of the reaction system at the original reaction temperature can still ensure the stability of the intermediate solution. Therefore, when the reaction time between the initial alloy and the first concentration alkaline solution exceeds the required minimum reaction time, such as a few hours, the intermediate solution mainly in a clear state can still be obtained;
In the step 3, the alkaline concentration of the intermediate solution in step 2 is reduced to below the second concentration, or the temperature of the intermediate solution in step 2 is reduced to below *T*₂ temperature, or both the alkaline concentration and temperature of the intermediate solution in step 2 are reduced to below the second concentration and below *T*₂ temperature, so that solid products containing M are precipitated from the intermediate solution after the concentration or (and) temperature is reduced; The second concentration is lower than the first concentration, and the temperature of *T*₂ is lower than that of *T*₁;
Furthermore, solid products containing M precipitate from the intermediate solution after concentration or (and) temperature reduction, while T and A elements continue to dissolve in the intermediate solution after alkali concentration or (and) temperature reduction;
It can be understood that solid products containing M precipitate from the intermediate solution, while T and A elements continue to dissolve in the intermediate solution after alkali concentration or (and) temperature reduction. By utilizing this rule, the goal of preparing high-purity solid products containing M from low-purity initial alloys or more primary low-purity metal raw materials containing a considerable amount of A elements has been achieved;
Furthermore, the concentration of the second concentration alkaline solution is lower than that of the first concentration alkaline solution, and depending on different situations, when the concentration drops to a certain value, solid products containing M can be significantly precipitated from the alkaline solution;
Furthermore, the *T*₂ temperature is lower than the *T*₁ temperature; After lowering the temperature below *T*₂, solid products containing M can partially precipitate from the alkaline solution;
By reducing the temperature, the efficiency of precipitation of solid products containing M from the intermediate solution is not high. Only when the initial alloy addition is large, can the solid products containing M be significantly precipitated by lowering the temperature. When the initial alloy addition is small, it is difficult to precipitate solid products containing M; In order to efficiently precipitate solid products containing M from the intermediate solution, in addition to increasing the amount of initial alloys participating in the reaction as much as possible, it is preferable to simultaneously reduce the temperature and concentration of the intermediate solution. The decrease in concentration is very effective for the precipitation of solid products containing M in the intermediate solution;
Furthermore, simultaneously reduce the alkaline concentration and temperature of the intermediate solution described in step 2 to below the second concentration and *T*₂ temperature, so that solid products containing M can precipitate from the intermediate solution after the concentration and temperature decrease;
Furthermore, the concentration of the second concentration alkaline solution is lower than that of the first concentration alkaline solution;
Furthermore, the concentration of the second concentration alkaline solution is below 5mol/L;
Furthermore, the concentration of the second concentration alkaline solution is below 3mol/L;
Furthermore, the concentration of the second concentration alkaline solution is below 2mol/L;
Furthermore, the concentration of the second concentration alkaline solution is below 0.5mol/L;
Furthermore, the concentration of the second concentration alkaline solution is less than 0.8 times that of the first concentration;
Furthermore, the concentration of the second concentration alkaline solution is less than 0.25 times that of the first concentration;
Furthermore, the concentration of the second concentration alkaline solution is less than 0.03 times that of the first concentration;
Furthermore, *T*₂<100°C<*T*₁;
Furthermore, *T*₂<75°C<*T*₁;
Furthermore, *T*₂<45°C<*T*₁;
Furthermore, the time required to reduce the alkali concentration is less than 20 seconds;
The time required to reduce the alkali concentration is less than 5 seconds;
The time required to reduce the alkali concentration is less than 2 seconds;
Under normal pressure, as the reaction takes place in an open container, it is easy to add a cold solvent (such as water) to the intermediate solution to reduce the alkaline solution concentration of the intermediate solution described in step 2 to below the second concentration, while lowering the temperature to below *T*₂ temperature;
Furthermore, the method of reducing the alkaline concentration and temperature of the intermediate solution in step 2 includes adding a solvent for dilution;
Furthermore, the solvent corresponding to solvent dilution comprises water;
Furthermore, the temperature of the solvent corresponding to solvent dilution is room temperature;
Furthermore, the temperature of the solvent corresponding to solvent dilution is 0°C~35°C;
Furthermore, by diluting with solvent, the temperature of the intermediate solution with reduced concentration is *T*₂<45°C;
Furthermore, the method of reducing the alkaline concentration of the intermediate solution in step 2 includes diluting with a solvent, and the diluting solvent contains at least one of the surfactants or modifiers;
The purpose of adding surfactants or modifiers is to control the particle size of M containing solid products precipitated in intermediate solutions with concentrations below the second concentration, and to inhibit their abnormal merging and growth;
Furthermore, the surfactant or modifier comprises at least one of PVP, CTAB, and CTAC;
Furthermore, the solid product containing M exhibits a flocculent aggregation state in the intermediate solution after a decrease in concentration or (and) temperature;
In step 4,
Furthermore, collect solid products containing M to obtain nano ZrO₂/HfO₂;
Furthermore, the process of collecting solid products containing M includes solid-liquid separation, cleaning, and drying processes;
Furthermore, in the process of solid-liquid separation and cleaning, in order to remove residual alkali adsorbed on solid products containing M, the cleaning solution includes an appropriate amount of dilute acid solution that can participate in acid-alkali neutralization, with an acid concentration not exceeding 0.05mol/L, and maintaining a pH value of not less than 6 during the neutralization process.

Furthermore, the nano ZrO₂/HfO₂ refers to at least one of the components of nano ZrO₂/HfO₂, including nano ZrO₂, nano HfO₂, nano Zr(Hf)O₂, nano Hf(Zr)O₂, nano Hf(Zr)(OH)₄, and nano Zr(Hf)(OH)₄.

Furthermore, the shape of the nano ZrO₂/HfO₂ includes irregular granular, irregular spherical, and ultrafine flocculent bodies;
Furthermore, the particle size of the nano ZrO₂/HfO₂ ranges from 1.0nm to 150nm;
Furthermore, the particle size of the nano ZrO₂/HfO₂ ranges from 1.5nm to 50nm;
Furthermore, the particle size of the nano ZrO₂/HfO₂ ranges from 1.5nm to 5nm;
Furthermore, the particle size of the nano ZrO₂/HfO₂ is 1.5nm-3nm;
Furthermore, the nano ZrO₂/HfO₂ is mainly low crystalline nano ZrO₂/HfO₂;
Furthermore, the low crystalline nano ZrO₂/HfO₂ comprises of M(OH)₄;
Due to the fact that M(OH)₄ can be seen as a combination of MO₂ and H₂O, the low crystalline nano MO₂ of the present invention also includes M(OH)₄; the low crystalline M(OH)₄ can be considered as a form of low crystalline nano MO₂;
Furthermore, the low crystalline nano MO₂ comprises: low crystalline nano ZrO₂, low crystalline nano HfO₂, low crystalline nano (Hf-Zr)O₂, and low crystalline Hf(Zr)(OH)₄; Among them, (Hf-Zr)O₂ represents the mixture or mutual doping of ZrO₂ and HfO₂;
Furthermore, the low crystalline nano MO₂ comprises: amorphous nano ZrO₂, amorphous nano HfO₂, amorphous nano (Hf-Zr)O₂, amorphous nano Hf(Zr)(OH)₄, and amorphous nano Zr(Hf)(OH)₄;
Furthermore, the crystallinity of the low crystalline nano MO₂ is less than 50%;
Furthermore, the crystallinity of the low crystalline nano MO₂ is less than 10%.

The present invention also relates to a preparation method for crystalline nano ZrO₂/HfO₂, wherein the crystalline nano ZrO₂/HfO₂ mainly composed of crystalline nano ZrO₂/HfO₂ was obtained by heating treat the product described in step 4.
Furthermore, the temperature of the heat treatment is between 300°C and 2000°C;
Furthermore, the temperature of the heat treatment is between 500°C and 2000°C;
Furthermore, the heat treatment time is 1 minute to 24 hours;
Furthermore, the heat treatment time is 5 minutes to 24 hours;
It can be understood that with the extension of heat treatment time and the increase of heat treatment temperature, the crystallinity of the obtained crystalline nano ZrO₂/HfO₂ continuously increases until it is fully crystallized;
Furthermore, different heat treatment temperatures can result in different crystalline nano ZrO₂/HfO₂; For example, the ZrO₂ obtained by heat treatment below 1100°C is a monoclinic ZrO₂, the ZrO₂ obtained by heat treatment at 1100 °C ~1900 °C is a tetragonal crystal structure; the cubic crystalline ZrO₂ can be obtained by heat treatment above 1900°C.
Furthermore, the particle size of the crystalline nano ZrO₂/HfO₂ ranges from 2nm to 300nm;
Furthermore, the particle size of the crystalline nano ZrO₂/HfO₂ ranges from 2nm to 75nm;
Furthermore, the particle size of the crystalline nano ZrO₂/HfO₂ ranges from 2nm to 10nm;
Furthermore, the crystalline nano ZrO₂/HfO₂ particles have a polycrystalline structure;
Furthermore, the grain size in the crystalline nano ZrO₂/HfO₂ particles ranges from 2nm to 100nm;
Furthermore, the grain size in the crystalline nano ZrO₂/HfO₂ particles ranges from 2nm to 50nm;
Furthermore, the grain size in the crystalline nano ZrO₂/HfO₂ particles ranges from 2nm to 10nm;
Furthermore, the crystallinity of the crystalline nano ZrO₂/HfO₂ is higher than 50%;
Furthermore, the crystallinity of the crystalline nano ZrO₂/HfO₂ is higher than 75%;
Furthermore, the crystallinity of the crystalline nano ZrO₂/HfO₂ is higher than 99%;
Furthermore, the crystalline nano ZrO₂/HfO₂ comprises at least one of crystalline nano ZrO₂, crystalline nano HfO₂, crystalline nano Zr(Hf)O₂, and Hf(Zr)O₂.

The present invention also relates to an application of nano ZrO₂/HfO₂ prepared by the above-mentioned preparation method in ceramic materials, composite materials, high-performance electronic devices, and semiconductor devices.

Furthermore, the nano ZrO₂/HfO₂ comprises at least one of low crystalline nano-oxidized-Zr/Hf and crystalline nano ZrO₂/HfO₂;
The present invention also relates to a preparation method for a ceramic material containing nano ZrO₂/HfO₂, comprising the following steps:
Step S1, prepare a uniformly mixed powder, wherein the mixed powder comprises nano ZrO₂/HfO₂ prepared by the above preparation method and an external powder; among them, the molar percentage content of the nano ZrO₂/HfO₂ in the mixed powder is *V*₁, and the molar percentage content of the external powder in the mixed powder is *V*₂, and the external powder comprises at least one of Al₂O₃, CaO, MgO, SiO₂, B₂O₃, BeO, TiC, and SiC; among them, 1%≤*V*₁≤100%, 0≤*V*₂≤99%;
Step S2, press the mixed powder into a green body, and then calcine it at high temperature to obtain a ceramic material containing nano ZrO₂/HfO₂.

In step S1,
Furthermore, 2%≤*V*₁≤100%; 0≤*V*₂≤98%; Furthermore, 10%≤*V*₁≤100%; 0≤*V*₂≤90%;
Furthermore, 25%≤*V*₁≤100%; 0≤*V*₂≤75%; Furthermore, 50%≤*V*₁≤100%; 0≤*V*₂≤50%;
Furthermore, the nano ZrO₂/HfO₂ comprises at least one of low crystalline nano ZrO₂/HfO₂ and crystalline nano ZrO₂/HfO₂;
When *V*₂=0, there is no need to add additional powder during the mixing process;
When *V*₂>0, in addition to the prepared nano ZrO₂/HfO₂, the mixed powder also contains external powder components, so an additional mixing process is required to evenly mix the mixed powder;
Furthermore, the mixing process includes wet ball milling treatment and dry ball milling treatment, and after the ball milling treatment is completed, a uniformly mixed powder is obtained by drying;
In step S2,
Furthermore, the forming pressure for pressing into a green body is between SMPa and 800MPa;
Furthermore, the calcine temperature ranges from 500°C to 2000°C;
Furthermore, the pressing calcine process comprises at least one of two schemes: simultaneously heating and calcine the pressing green body, and pressing the green body first and then calcining it.

The present invention also relates to a preparation method for metal nanoparticle doped nano ZrO₂/HfO₂, comprising the following steps:
Step (1), provide an initial alloy, which includes three types of elements: M, T, and D; Among them, M contains at least one of Zr and Hf; T contains at least one of Al and Zn; D contains at least one of Ru, Rh, Pd, Ag, Re, Os, Ir, Pt, Au and Cu; The phase composition of the initial alloy is mainly composed of M-T intermetallic compounds with D elements in solid solution;
Step (2), react the initial alloy with an alkaline solution at a temperature of *T*₁ and a concentration of the first concentration, so that the M and T elements in the initial alloy are dissolved in the alkaline solution; At the same time, the solid solution of D element atoms in the original M-T intermetallic compound re-aggregates to form nanoparticles mainly composed of D elements, thereby obtaining an intermediate solution containing D nanoparticles; Among them, *T*₁ ≥75°C;
Step (3), reduce the alkaline concentration of the intermediate solution described in Step (2) to below the second concentration, so that the solid substance containing M precipitates from the reduced concentration of the intermediate solution and simultaneously combines with D nanoparticles;
Step (4), collect the composite product of solid material containing M and D nanoparticles, to obtain the nano ZrO₂/HfO₂ doped with D nanoparticles.

In Step (1),
Furthermore, the T element comprises Al; Furthermore, the T element is Al;
Furthermore, the T element comprises Zn; Furthermore, the T element is Zn;
Furthermore, the M element comprises at least one of Zr, Hf; and the meaning of "M" in this manual is equivalent to "Zr/Hf";
Furthermore, the elemental composition of the initial alloy is mainly DₓT_{y}M_{z}, where x, y, and z are the atomic percentage contents corresponding to each type of element, and 0<x≤7.5%, 45%≤y<95%, 5%≤z<55%;
Furthermore, 0<x≤5%, 45%≤y<95%, 5%≤z<55%;
Furthermore, 0<x≤5%, 45%≤y<76%, 24%≤z<55%;
Furthermore, 0<x≤2%, 45%≤y<76%, 24%≤z<55%;
Furthermore, 0<x≤2%, 45%≤y<69%, 31%≤z<55%;
Furthermore, the initial alloy is prepared by solidifying an alloy melt containing D, T, and M elements, forming a solidification structure mainly composed of M-T intermetallic compounds during the alloy solidification process; D-type elements are mainly solid dissolved in M-T intermetallic compounds.

Furthermore, the solidification rate of the initial alloy melt is between 0.01K/s and 10⁷K/s;
Furthermore, the initial alloy is mainly composed of M-T intermetallic compound phases with D-type elements in solid solution;
Furthermore, the M-T intermetallic compound refers to the phase composition of the intermetallic compound becoming the M-T intermetallic compound phase, that is, the XRD phase analysis result of the M-T intermetallic compound phase is the M-T intermetallic compound phase, and the main stoichiometric relationship of the M-T intermetallic compound phase includes at least one of MT₃, MT₂, M₂T₃, and MT.
Furthermore, the M-T intermetallic compound phase can also contain elements other than M and T, such as D elements;
Furthermore, the M-T intermetallic compound comprises at least one of HfAl₃, HfAl₂, Hf₂Al₃, HfAl, ZrAl₃, ZrAl₂, Zr₂Al₃, and ZrAl intermetallic compounds;
Furthermore, the solid solution includes interstitial solid solution and displacement solid solution;
Furthermore, the M-T intermetallic compound with a solid solution containing D-type elements refers to the presence of D-type element atoms in the lattice gaps of M-T intermetallic compounds in the form of interstitial atoms, or the substitution of M-type atoms or T-type atoms in the lattice of M-T intermetallic compounds by D-type element atoms in the form of substitution atoms;
Furthermore, the initial alloy is in the form of a powder or a ribbon, and the powder particles or ribbons have a scale of less than 5 mm in at least one dimension in the three-dimensional direction;
Furthermore, the initial alloy powder particles or ribbons have a scale of less than 500 µm in at least one dimension in the three-dimensional direction;
As a preference, the initial alloy powder particles or ribbons have a scale of less than 50 µm in at least one dimension in the three-dimensional direction;
Furthermore, when the initial alloy is in a ribbon shape, it can be prepared by including the melt throwing method;
Furthermore, when the initial alloy is in powder form, larger initial alloy ingots can be prepared by casting method, and then crushed into initial alloy powder.

In Step (2),
Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the first concentration of alkaline solution is 5~30mol/L;
As a preference, the concentration of alkali in the first concentration of alkaline solution is 5~15mol/L;
As a preference, the concentration of alkali in the first concentration of alkaline solution is 7~12mol/L;
Furthermore, the alkali in the first concentration alkaline solution that reacts with the initial alloy is an excess dose, and the volume of the first concentration alkaline solution is more than 5 times the volume of the initial alloy, so that the reaction can continue at a higher alkali concentration;
Furthermore, the volume of the first concentration alkaline solution is more than 10 times the initial alloy volume;
Furthermore, the volume of the first concentration alkaline solution is more than 20 times the initial alloy volume;
Furthermore, the reaction temperature of the initial alloy and the first concentration alkaline solution is the temperature of the alkaline solution;
Furthermore, the reaction between the initial alloy and the alkaline solution is carried out under normal or high pressure;
Furthermore, the atmospheric pressure refers to the atmospheric environment pressure without the use of sealed containers;
Furthermore,75°C≤*T*₁≤*T*_{f solution}; wherein the *T*_{f solution} is the boiling point temperature of the solution of the alkali involved in the reaction at ambient pressure;
Furthermore, 81°C≤*T*₁≤*T*_{f solution}; Furthermore, 91°C≤*T*₁≤*T*_{f solution};
Furthermore, 100°C≤*T*₁≤*T*_{f solution}; Furthermore, 100°C≤*T*₁≤*T*_{f solution};
Furthermore, 101°C≤*T*₁≤*T*_{f solution};
Furthermore, 105°C≤*T*₁≤*T*_{f solution};
Furthermore, 101°C≤*T*_{fsolution}-5°C≤*T*₁≤*T*_{f solution};
Furthermore, 101°C≤*T*_{fsolution}-5°C≤*T*₁≤*T*_{f solution};
As a further preference, the temperature of the alkaline solution is *T_{f solution},* i.e. *T₁* = *T_{f solution}*;
Since the highest temperature to which the reaction solution can be heated at ambient pressure is its boiling point temperature (*T_{f solution}*)*,* when the temperature reaches this temperature and continues to be heated, the temperature of the solution does not increase. When increasing the reaction temperature, a higher boiling point temperature can be achieved by increasing the concentration of the alkaline solution; Therefore, the boiling point temperature is the easiest, simplest, and most accurate to control. Moreover, the reaction time required for the boiling point temperature reaction is also shorter than that required for other temperatures below the boiling point and the product yield and efficiency are also the highest;
The T-type elements contain at least one of Al and Zn, which are zwitterionic metals that can react with hot concentrated alkaline solutions to form salts and dissolve in alkaline solutions. Therefore, the T-type elements can be removed from M-T intermetallic compounds in the initial alloy by reacting with alkaline solutions; At the same time, the M-type elements are also soluble in hot alkaline solutions; And the D-type elements generate D nanoparticles through diffusion, rearrangement, and aggregation;
The present invention finds that: 1) during the reaction between the initial alloy and hot concentrated alkali, due to the low content of D-type elements, the solid solution of D-type elements in the initial alloy does not form a nanoporous D structure, but generates soft agglomerated D nanoparticles mainly composed of D elements through diffusion, rearrangement, and aggregation evolution; 2) When the Zr and Hf elements in the M-T intermetallic compound react with a hot concentrated alkali solution, the Zr and Hf elements are also dissolved in the hot concentrated alkali solution, and this solubility ability is significantly enhanced with the increase of temperature. Specifically, when the reaction takes place at atmospheric pressure and occurs at the boiling point temperature *T_{f solution}* of the alkaline solution, this dissolution phenomenon is extremely evident.

Under normal pressure, the alkaline solution at boiling point temperature provides a very special reaction environment for the reaction. Under this special reaction environment condition, Zr and Hf elements can be fully dissolved in hot concentrated alkaline solutions.

Furthermore, the M-type elements are dissolved in the intermediate solution;
The solubility of M elements in intermediate solutions refers to the ability of M elements to dissolve in solutions mainly composed of alkaline solutions, without considering the presence of D nanoparticles in the intermediate solution, resulting in a clear intermediate solution.
Furthermore, the intermediate solution and D nanoparticles form an intermediate colloidal solution suspended with soft agglomerated D nanoparticles;
Furthermore, the initial alloy is reacted with an alkaline solution of the first concentration, and the theoretical shortest time required for this reaction is the time when M and T elements are completely dissolved in the alkaline solution of the first concentration;
Furthermore, the reaction time between the initial alloy and the first concentration alkaline solution at *T*₁ temperature is 15s~1h;
Furthermore, the reaction time between the initial alloy and the first concentration alkaline solution at *T*₁ temperature is 15 seconds to 9.9 minutes;
Furthermore, the reaction time between the initial alloy and the first concentration alkaline solution at *T*₁ temperature is 15 seconds to 4.9 minutes;
Furthermore, the reaction time between the initial alloy and the first concentration alkaline solution at *T*₁ temperature is 15 seconds to 1 minute;
Furthermore, the reaction time between the initial alloy and the first concentration alkaline solution at *T*₁ temperature is 15s~30s;
As a preference, *T*₁=*T*_{f solution} at atmospheric pressure;
Obviously, the higher the *T*₁ temperature, and the thinner the initial alloy thickness or the smaller the particle size, the shorter the required reaction time; On the contrary, the longer the reaction time;
Furthermore, the completion time of the reaction is related to the rate at which the reaction interface advances inward from the initial alloy surface per unit time. The higher the temperature of the alkaline solution, the faster the rate at which the reaction interface advances and the shorter the reaction time.

According to the average advancement rate of the reaction interface and the size of the initial alloy, the minimum reaction time required for the completion of the reactions can be calculated as *t*. For example, when the initial alloy is a ribbon with a thickness of *d,* and the average advancement rate of the reaction interface is v, taking into account the fact that the reaction interface advances from the upper and lower surfaces of the ribbon, *t*=0*.*5*d*/*v;* similarly, when the initial alloy is a granular alloy with a diameter of *d* and the average advancement rate of the reaction interface is *v*, *t*=0.5*d*/*v.*

Furthermore, during the reaction process between the initial alloy and the first concentration of alkaline solution, the reaction interface advances inward from the initial alloy surface is greater than 5 µm/min;
For example, when the alkaline concentration is 10mol/L of NaOH, according to the experimental results, the initial alloy ribbon of ZrAl₃ intermetallic compound containing Ag in solid solution reacts with the alkaline solution, and the rate of the reaction interface inward from the initial alloy surface is as follows:
When 75°C≤*T₁*≤80°C the average advancement rate of the reaction interface is about 6µm/min~9µm/min;
When 80°C<*T₁*≤90°C, the average advancement rate of the reaction interface is about 9µm/min~15µm/min;
When 90°C<*T₁*≤100°C, the average advancement rate of the reaction interface is about 15µm/min~30µm/min;
When 100°C<*T₁*≤110°C, the average advancement rate of the reaction interface is about 30µm/min~50µm/min;
When 110°C<*T₁*≤120°C, the average advancement rate of the reaction interface is about 50µm/min~120µm/min;
When 120°C<*T₁*<*T*_{f solution}, the average advancement rate of the reaction interface is greater than 120µm/min;
Therefore, the initial alloy ribbon of ZrAl₃ intermetallic compound containing Ag in solid solution react with a 10mol/L NaOH solution at boiling point temperature, and the rate at which the initial alloy ribbon thickness decreases is about 120µm/min, i.e. The initial alloy ribbon with a thickness of 40µm can react on the upper and lower surfaces, and in 10 seconds, almost all of the initial alloy ribbons can be dissolved, resulting in the M and T elements contained in the initial alloy to mainly enter the intermediate solution. Therefore, an initial alloy ribbon with a thickness of 40µm, can be almost completely dissolved in 15 seconds, considering the uneven thickness; For the initial alloy powder with an average particle size of 20µm, considering the uneven particle size, the M and T elements contained in the initial alloy can be almost completely dissolved in 10 seconds; Even for the initial alloy ultra coarse powder with a particle size of 5mm, the reaction can be completed in 21 minutes;
After the reaction is completed, the reaction system then reaches equilibrium; At this point, continuing to extend the holding time of the reaction system at the original reaction temperature can still ensure the stability of the intermediate solution. Therefore, when the reaction time between the initial alloy and the first concentration alkaline solution exceeds the required minimum reaction time, such as a few hours, the intermediate solution suspended with D nanoparticles can still be obtained;
Obviously, the higher the temperature of *T*₁*,* the thinner the initial alloy thickness or the smaller the particle size, and the shorter the required reaction time; On the contrary, the longer the reaction time;
Furthermore, the particle size of D nanoparticles contained in the intermediate solution ranges from 1.5nm to 50nm;
Furthermore, the particle size of D nanoparticles contained in the intermediate solution ranges from 1.5nm to 25nm;
Furthermore, the particle size of D nanoparticles contained in the intermediate solution ranges from 1.5nm to 10nm;
Furthermore, the composition of the D nanoparticles contained in the intermediate solution includes at least one of Ru, Rh, Pd, Ag, Re, Os, Ir, Pt, Au, and Cu;
Furthermore, the composition of the D nanoparticles contained in the intermediate solution includes at least one of Ru, Rh, Pd, Ag, Re, Os, Ir, Pt, and Au;
In Step (3),
Furthermore, the concentration of the second concentration alkaline solution is below 5mol/L;
Furthermore, the concentration of the second concentration alkaline solution is below 3mol/L;
Furthermore, the concentration of the second concentration alkaline solution is below 2mol/L;
Furthermore, the concentration of the second concentration alkaline solution is below 0.5mol/L;
Furthermore, the concentration of the second concentration alkaline solution is less than 0.8 times that of the first concentration;
Furthermore, the concentration of the second concentration alkaline solution is less than 0.25 times that of the first concentration;
Furthermore, the concentration of the second concentration alkaline solution is less than 0.03 times that of the first concentration;
Furthermore, the time required to reduce the alkali concentration is less than 20 seconds;
The time required to reduce the alkali concentration is less than 10 seconds;
The time required to reduce the alkali concentration is less than 5 seconds;
The time required to reduce the alkali concentration is less than 2 seconds;
Under normal pressure, as the reaction takes place in an open container, it is easy to add a cold solvent (such as water) to the intermediate solution to reduce the alkaline solution concentration of the intermediate solution described in Step (2) to below the second concentration;
Furthermore, the method of reducing the alkaline concentration and temperature of the intermediate solution in Step (2) includes adding a solvent for dilution;
Furthermore, the solvent corresponding to solvent dilution comprises water;
Furthermore, the temperature of the solvent corresponding to solvent dilution is room temperature;
Furthermore, the temperature of the solvent corresponding to solvent dilution is 0°C~35°C;
Furthermore, by diluting with solvent, the temperature of the intermediate solution with reduced concentration is less than 45°C;
Furthermore, the method of reducing the alkaline concentration of the intermediate solution in Step (2) includes diluting with a solvent, and the diluting solvent contains at least one of the surfactants or modifiers;
The purpose of adding surfactants or modifiers is to control the particle size of M containing solid products precipitated in intermediate solutions with concentrations below the second concentration, and to inhibit their abnormal merging and growth;
Furthermore, the surfactant or modifier comprises at least one of PVP, CTAB, and CTAC;
Furthermore, the solid substance containing M forms a flocculent aggregation state in the intermediate solution after the concentration is reduced, and is compounded with D nanoparticles that originally existed in the intermediate solution.

In Step (4),
The doping of D nanoparticles does not necessarily mean that D nanoparticles are impurities. This is a concept relative to the matrix material they are composite with, that is, D nanoparticles are substances with different compositions from the attached nano ZrO₂/HfO₂.

Furthermore, the process of collecting solid products containing M and D nanoparticles includes solid-liquid separation, cleaning, and drying processes;
Furthermore, in the process of solid-liquid separation and cleaning, in order to remove residual alkali adsorbed on solid products containing M, the cleaning solution includes an appropriate amount of dilute acid solution that can participate in acid-alkali neutralization, with an acid concentration not exceeding 0.05mol/L, and maintaining a pH value of not less than 6 during the neutralization process.

Furthermore, the nano ZrO₂/HfO₂ is a low crystalline nano ZrO₂/HfO₂;
Furthermore, the shape of the nano ZrO₂/HfO₂ includes irregular granular, irregular spherical, and ultrafine flocculent bodies;
Furthermore, the particle size of the nano ZrO₂/HfO₂ ranges from 1.0nm to 150nm;
Furthermore, the particle size of the nano ZrO₂/HfO₂ ranges from 1.5nm to 50nm;
Furthermore, the particle size of the nano ZrO₂/HfO₂ ranges from 1.5nm to 5nm;
Furthermore, the particle size of the nano ZrO₂/HfO₂ ranges from 1.5nm to 3nm;
Furthermore, the nano ZrO₂/HfO₂ is mainly a low crystalline nano ZrO₂/HfO₂;
Furthermore, the low crystalline nano ZrO₂/HfO₂ comprises M(OH)₄;
Due to the fact that M(OH)₄ can be seen as a combination of MO₂ and H₂O, the low crystalline nano MO₂ of the present invention also includes M(OH)₄; the low crystalline M(OH)₄ can be considered as a form of low crystalline nano MO₂;
Furthermore, the low crystalline nano MO₂ comprises: low crystalline nano ZrO₂, low crystalline nano HfO₂, low crystalline nano (Hf-Zr)O₂, and low crystalline Hf(Zr)(OH)₄; Among them, (Hf-Zr)O₂ represents the mixture or mutual doping of ZrO₂ and HfO₂;
Furthermore, the low crystalline nano MO₂ comprises: amorphous nano ZrO₂, amorphous nano HfO₂, amorphous nano (Hf-Zr)O₂, amorphous nano Hf(Zr)(OH)₄, and amorphous nano Zr(Hf)(OH)₄;
Furthermore, the crystallinity of the low crystalline nano ZrO₂/HfO₂ is less than 50%;
Furthermore, the crystallinity of the low crystalline nano ZrO₂/HfO₂ is less than 10%.
Furthermore, the particle size of the D nanoparticles ranges from 1.5nm to 50nm;
Furthermore, the particle size of the D nanoparticles ranges from 1.5nm to 25nm;
Furthermore, the particle size of the D nanoparticles ranges from 1.5nm to 10nm;
Furthermore, the composition of the D nanoparticles comprises at least one of Ru, Rh, Pd, Ag, Re, Os, Ir, Pt, Au, Cu;
Furthermore, the composition of the D nanoparticles comprises at least one of Ru, Rh, Pd, Ag, Re, Os, Ir, Pt, and Au;
Furthermore, the D nanoparticles are mainly combined with low crystalline nano ZrO₂/HfO₂ through adsorption and physical mixing;
Furthermore, the D nanoparticles are mainly combined with low crystalline nano ZrO₂/HfO₂ through adsorption;

The present invention also relates to a method for preparing crystalline nano ZrO₂/HfO₂ doped with metal nanoparticles. By heat treating the nano ZrO₂/HfO₂ doped with D nanoparticles as described in Step (4) above, the crystalline nano ZrO₂/HfO₂ doped with D nanoparticles is obtained.
Furthermore, the temperature of the heat treatment is between 300°C and 2000°C;
Furthermore, the temperature of the heat treatment is between 500°C and 2000°C;
Furthermore, the heat treatment time is 1 minute to 24 hours;
Furthermore, the heat treatment time is 5 minutes to 24 hours;
It can be understood that with the extension of heat treatment time and the increase of heat treatment temperature, the crystallinity of the obtained crystalline nano ZrO₂/HfO₂ doped with D nanoparticles continuously increases until it is fully crystallized;
Furthermore, different heat treatment temperatures can result in different crystalline nano ZrO₂/HfO₂; For example, the ZrO₂ obtained by heat treatment below 1100°C is a monoclinic ZrO₂, the ZrO₂ obtained by heat treatment at 1100 °C ~1900 °C is a tetragonal crystal structure; the cubic crystalline ZrO₂ can be obtained by heat treatment above 1900°C.
Furthermore, the particle size of the crystalline nano ZrO₂/HfO₂ ranges from 2nm to 300nm;
Furthermore, the particle size of the crystalline nano ZrO₂/HfO₂ ranges from 2nm to 75nm;
Furthermore, the particle size of the crystalline nano ZrO₂/HfO₂ ranges from 2nm to 10nm;
Furthermore, the crystalline nano ZrO₂/HfO₂ particles have a polycrystalline structure;
Furthermore, the grain size in the crystalline nano ZrO₂/HfO₂ particles ranges from 2nm to 100nm;
Furthermore, the grain size in the crystalline nano ZrO₂/HfO₂ particles ranges from 2nm to 50nm;
Furthermore, the grain size in the crystalline nano ZrO₂/HfO₂ particles ranges from 2nm to 10nm;
Furthermore, the crystallinity of the crystalline nano ZrO₂/HfO₂ is higher than 50%;
Furthermore, the crystallinity of the crystalline nano ZrO₂/HfO₂ is higher than 75%;
Furthermore, the crystallinity of the crystalline nano ZrO₂/HfO₂ is higher than 99%;
Furthermore, the crystalline nano ZrO₂/HfO₂ comprises at least one of crystalline nano ZrO₂, crystalline nano HfO₂, crystalline nano Zr(Hf)O₂, and Hf(Zr)O₂.
Furthermore, the particle size of the D nanoparticles ranges from 1.5nm to 60nm;
Furthermore, the particle size of the D nanoparticles ranges from 1.5nm to 30nm;
Furthermore, the particle size of the D nanoparticles ranges from 1.5nm to 15nm;
Furthermore, the composition of the D nanoparticles comprises at least one of Ru, Rh, Pd, Ag, Re, Os, Ir, Pt, Au, Cu;
Furthermore, the composition of the D nanoparticles comprises at least one of Ru, Rh, Pd, Ag, Re, Os, Ir, Pt, and Au;
Furthermore, the D nanoparticles are mainly combined with crystalline nano ZrO₂/HfO₂ through adsorption and physical mixing;
Furthermore, the D nanoparticles are mainly combined with crystalline nano ZrO₂/HfO₂ through adsorption;

The present invention also relates to a method for preparing metal nanoparticles, wherein the intermediate solution containing D nanoparticles obtained in Step (2) is solid-liquid separated, then the D nanoparticles were obtained.
Furthermore, the separation process includes acid washing, which involves washing off residual alkalis or other non D components on the surface of D nanoparticles through a dilute acid solution;
Furthermore, the particle size of the D nanoparticles ranges from 1.5nm to 200nm; After the aggregation of D nanoparticles, some particles can merge and grow together;
Furthermore, the particle size of the D nanoparticles ranges from 1.5nm to 50nm;
Furthermore, the particle size of the D nanoparticles ranges from 1.5nm to 25nm;
Furthermore, the particle size of the D nanoparticles ranges from 1.5nm to 10nm;
Furthermore, the composition of the D nanoparticles comprises at least one of Ru, Rh, Pd, Ag, Re, Os, Ir, Pt, Au, Cu;
Furthermore, the composition of the D nanoparticles comprises at least one of Ru, Rh, Pd, Ag, Re, Os, Ir, Pt, and Au;

The present invention also relates to another method for preparing metal nanoparticles, wherein the nano ZrO₂/HfO₂ doped with the D nanoparticles obtained in Step (4) is dissolved through acid solution reaction, while retaining the D nanoparticles; After solid-liquid separation, the D nanoparticles were obtained.
Furthermore, the acid solution comprises at least one of hydrochloric acid, nitric acid, sulfuric acid, acetic acid, phosphoric acid, oxalic acid, picric acid, oleic acid, and perchloric acid;
Due to the fact that the nano ZrO₂/HfO₂ prepared in Step (4) above is mainly low crystalline nano ZrO₂/HfO₂, which is in a high-energy metastable state, it can react with a certain concentration of acid solution and dissolve in the acid solution.
As a preferred solution, the concentration of the acid solution is 0.1mol/L~5mol/L;
As a preferred solution, the concentration of the acid solution is 0.1mol/L~2mol/L;
As a preferred solution, the concentration of the acid solution is 0.1mol/L~1mol/L;
Furthermore, the particle size of the D nanoparticles ranges from 1.5nm to 200nm; After the aggregation of D nanoparticles, some particles can merge and grow together;
Furthermore, the particle size of the D nanoparticles ranges from 1.5nm to 50nm;
Furthermore, the particle size of the D nanoparticles ranges from 1.5nm to 25nm;
Furthermore, the particle size of the D nanoparticles ranges from 1.5nm to 10nm;
Furthermore, the composition of the D nanoparticles comprises at least one of Ru, Rh, Pd, Ag, Re, Os, Ir, Pt, Au, Cu;
Furthermore, the composition of the D nanoparticles comprises at least one of Ru, Rh, Pd, Ag, Re, Os, Ir, Pt, and Au;

The present invention also relates to the application of D nanoparticles doped nano ZrO₂/HfO₂, or D nanoparticles doped crystalline nano ZrO₂/HfO₂, or D nanoparticles in polymer based nanocomposites, catalytic materials, ceramic materials, composite materials, high-performance electronic devices, sewage degradation materials, bactericidal coatings, and anti-corrosion coatings prepared by the above-mentioned preparation method.

The present invention also relates to a preparation method for an Ag containing bactericidal ceramic material, characterized in that it comprises the following steps: adding the nano ZrO₂/HfO₂ doped with D nanoparticles or the crystalline nano ZrO₂/HfO₂ doped with D nanoparticles prepared by the above preparation method as necessary components into the raw ceramic powder, and the main component of the D nanoparticles is Ag element; After preparing the blank and high-temperature calcination, the bactericidal ceramic material containing Ag is obtained.
Furthermore, in the raw ceramic powder, the weight percentage of nano ZrO₂/HfO₂ doped with D nanoparticles or crystalline nano ZrO₂/HfO₂ doped with D nanoparticles exceeds 5%;
Furthermore, the pressure during the blank making process ranges from SMPa to 800MPa;
Furthermore, the calcination temperature ranges from 500°C to 2000°C.

The beneficial effects of the present invention are mainly reflected in the following aspects:
Firstly, the initial alloy is inexpensive and readily available, and contain a high content of A impurity elements, and mainly composed of M-T intermetallic compounds; by using the initial alloy as the raw material, the initial alloy is reacted with the alkali solution near the boiling point temperature at atmospheric pressure, creatively achieving the dissolution of the initial alloy in hot alkali and obtaining an intermediate solution. By subsequently reducing the alkaline concentration or (and) temperature of the intermediate solution, the solid products containing M are precipitated from the intermediate solution, thereby achieving the preparation of low crystalline nano MO₂; Combined with subsequent heat treatment, crystalline nano MO₂ was further prepared. In addition, by using an initial alloy composed mainly of M-T intermetallic compounds with solid-solution D-type elements as the raw material, the initial alloy was reacted with the alkaline solution near the boiling point temperature at atmospheric pressure, creatively achieving the dissolution of M-T intermetallic compounds in hot alkali and the precipitation of D-type elements in the form of D nanoparticles after diffusion, rearrangement, and aggregation, resulting in the preparation of an intermediate solution containing D nanoparticles. By subsequently reducing the alkaline concentration of the intermediate solution, low crystalline nano MO₂ was precipitated from the intermediate solution, thus achieving the preparation of low crystalline nano MO₂ doped with D nanoparticles; Combined with subsequent heat treatment, crystalline nano MO₂ doped with D nanoparticles was further prepared; In addition, the preparation of D nanoparticles has been achieved through the separation of D nanoparticles from the intermediate solution or the separation of D nanoparticles from low crystalline nano MO₂.
Secondly, by dissolving M-T intermetallic compounds in hot alkali at *T*₁ ≥75°C, or preferably near the boiling point temperature of the alkali solution, the intermediate solution was obtained in a very short time. When the initial alloy is sufficiently fine, the required reaction time can even not exceed 1 minute; Subsequently, by simply reducing the concentration of the intermediate solution, low crystalline nano MO₂ can precipitate from the reduced concentration of the intermediate solution. Meanwhile, the D-type elements dissolved in the initial alloy do not form nanoporous D structures during the reaction process, but instead generate D nanoparticles through diffusion, rearrangement, and aggregation; The reaction time of the entire preparation process described in the present invention is much lower than the reaction time required by other reported or disclosed preparation methods, and has extremely obvious positive significance. The acquisition of this obvious beneficial effect is closely related to the reaction of M-T intermetallic compounds at or near the boiling point temperature of the alkaline solution *T*_{f solution}. When the reaction occurs at atmospheric pressure and occurs at or near the boiling point temperature of the solution, the solution composition of the reaction system has obvious specificity, which is manifested in: being far below the boiling point temperature of the solution, the solvent mainly exists in liquid water; But at or near the boiling point temperature of the solution, in addition to liquid water and a large amount of highly active gaseous water (gaseous water produced by evaporation at boiling point temperature), the solvent also contains highly active water that is undergoing a transition from liquid water to gaseous water. Moreover, in this special environment, the content and state of dissolved atmospheric gases (oxygen, nitrogen) in the solvent are also extremely special (due to the large amount of boiling water vapor, T-type elements, and hydrogen generated by alkali reactions, which changes the saturation partial pressure conditions of dissolved gases in water). In addition, the large amount of hydrogen gas generated by the reaction between M-T intermetallic compounds and concentrated alkaline solutions, as well as a small amount of salt by-products dissolved in the solution, can change the material composition of the reaction solution system. These provide a very special reaction environment for the reaction, allowing the initial alloy to dissolve in the intermediate solution in a very short time;
Thirdly, the present invention creatively discovers that the Zr and Hf elements in the M-T intermetallic compound can be dissolved in a hot concentrated alkali solution when they react with it, and this solubility ability is significantly enhanced with increasing temperature. When the reaction occurs at atmospheric pressure and at the boiling point temperature of an alkaline solution, this dissolution phenomenon is extremely obvious. Specifically, the dissolution characteristics of Zr and Hf elements are related to the concentration of alkaline solutions; When the alkaline concentration or (and) temperature of the intermediate solution containing Zr and Hf elements decreases, solid products containing Zr and Hf will precipitate. It should be noted that the dissolution referred to here is not a narrow definition of dissolution, but specifically refers to the initial alloy being dissolved in an excess hot concentrated alkaline solution through a series of reactions, in a way similar to a complex or in other unknown ways. This special dissolution process is manifested as: the initial alloy reaction reacts with an alkaline solution, producing a large amount of reaction gas (H₂). After the reaction quickly ends, solid substances are generally not observed in the solution, but an almost colorless and clear intermediate solution is obtained. When D element is present in the solid solution of M-T intermetallic compound, this special dissolution process is manifested as follows: the initial alloy reaction reacts with an alkaline solution, producing a large amount of reaction gas (H₂). After the reaction is quickly completed, except for the generated D nanoparticles, other solid substances are generally not observed in the solution; That is to say, without considering the presence of D nanoparticles, a colorless and clear intermediate solution is obtained. This discovery is different from the traditional dealloying method for preparing metal nanoporous structures and the traditional dealloying method for preparing nano metal oxides. In these traditional dealloying reaction processes, reactants, intermediate products, and final products always exist in solid form, but their composition and morphology constantly change. Specifically, when preparing nanoporous metals using the dealloying method, inert elements always do not dissolve in the reaction solution, but exist in the form of solid nanoporous metals; Similarly, when preparing nano metal oxides using the dealloying method, the solid three-dimensional network nanoporous metal oxides formed will not dissolve in the reaction solution from beginning to end. Due to the solubility of M in the intermediate solution, its precipitation from the reduced concentration intermediate solution is a process from scratch. This characteristic can be utilized to obtain extremely small, low crystalline nano MO₂ by subsequently reducing the concentration of the intermediate solution or adding surfactants, which has significant positive implications.
Fourthly, precise reaction control can be achieved through the application of boiling point temperature. When the concentration of alkali in the solution is determined, the boiling point temperature that the solution can be heated to under normal pressure is also determined, which means that the pressure and temperature in the reaction conditions are accurately determined. At the boiling point temperature of an alkaline solution, any excess heat added to the solution will be converted into the heat of vaporization of water without causing an increase in solution temperature. This can be achieved by continuously heating the solution to maintain a constant boiling point temperature. Even if a large amount of latent heat is generated during the reaction process, the temperature of the reaction solution can still be maintained at the boiling point temperature of the solution.
Fifthly, it has been achieved to prepare nano metal oxides containing Zr and Hf through low-purity M raw materials containing A elements, low-purity T raw materials, or low-purity initial alloys. Specifically, after reacting the initial alloy with a hot alkaline solution to obtain an intermediate solution, the alkali concentration or (and) temperature of the intermediate solution is reduced, allowing the solid products containing M to precipitate from the intermediate solution; The T-type and A-type elements in the original initial alloy continue to dissolve in the intermediate solution after the alkali concentration or (and) temperature has decreased; The target solid product containing M precipitates from the intermediate solution, while A-type elements mainly continue to dissolve in the intermediate solution after alkali concentration or (and) temperature reduction. By utilizing this rule, the goal of preparing high-purity M-containing solid products from low-purity M raw materials, low-purity T raw materials, or low-purity initial alloys containing A-type elements has been achieved; Especially with no requirement for the O content of the initial alloy, it can be prepared in low vacuum or even atmospheric environments, greatly reducing production costs, simplifying production processes, and having significant beneficial effects.
Sixthly, by utilizing the precipitation characteristics of low crystalline nano MO₂ from zero to some in the intermediate solution after concentration reduction, the addition of surfactants and modifiers can be combined to encapsulate the small low crystalline nano MO₂ particles that precipitate, inhibit their mutual merging and growth, thereby controlling the particle size and morphology of low crystalline nano MO₂, and preparing ultrafine low crystalline nano metal oxides containing M. After mixing with D nanoparticles, low crystalline nano MO₂ doped with D nanoparticles is obtained. However, the traditional preparation process of nano metal oxides does not involve the precipitation of particles from zero to some in the intermediate solution, and the particle size and morphology cannot be controlled through the addition of surfactants and modifiers.
Seventhly, by utilizing the characteristic that D-type elements dissolved in M-T intermetallic compounds do not form nanoporous D structures during the reaction with concentrated alkali, but instead generate D nanoparticles through diffusion, rearrangement, and aggregation, the preparation of D nanoparticles is achieved through the separation of D nanoparticles from the intermediate solution or D nanoparticles from low crystalline nano MO₂. The metastable and ultrafine characteristics of low crystalline nano MO₂ during this process make it possible to dissolve it through acid solution reactions.
Eighthly, this series of inventions can be carried out under normal pressure without the need for high-temperature, high-pressure, and long-term hydrothermal reactions (of course, high-temperature, high-pressure reactions can also fully obtain the products). The reaction temperature of the present invention is around the boiling point temperature of the solution or the boiling point temperature of the solution (depending on the concentration of alkali in the solution, the temperature is roughly between 75 °C and 200 °C, which is relatively mild); The required initial alloy can be prepared on a large scale through methods such as "alloy melting+casting+crushing" or "alloy melting+melt spinning", and the required melting materials can be ordinary or low purity M, T and other raw materials. Especially important, the critical reaction time can be as short as tens of seconds to a few minutes, which is extremely efficient; And the reaction temperature, pressure and other conditions can be precisely controlled. These characteristics greatly simplify the production process, improve production efficiency, and reduce production costs, making it possible for low-cost and efficient large-scale preparation of corresponding product materials.

Therefore, the preparation method of the present invention has the characteristics of simple process, easy operation, high efficiency, and low cost. Combined with heat treatment, nano MO₂ products with different crystallinity or nano MO₂ doped with D nanoparticles with different crystallinity can be prepared. These products have great application prospects in polymer based nano composite materials, ceramic materials, sensors, catalytic materials, thermal barrier coatings, fiber optic connectors, catalyst carriers, solid electrolytes, and wastewater degradation materials, bactericidal coatings, anti-corrosion coatings, high-performance electronic devices, and high-energy lasers.

### BRIEF DESCRIPTION OF THE DRAWINGS

Figure 1 shows the XRD pattern of low crystalline nano HfO₂ powder prepared in Embodiment 1 of the present invention;
Figure 2 shows the TEM morphology and diffraction spectrum of the low crystalline nano HfO₂ powder prepared in Embodiment 1 of the present invention;
Figure 3 shows the XRD pattern of the crystalline nano HfO₂ powder prepared in Embodiment 1 of the present invention;
Figure 4 shows the TEM morphology and diffraction spectrum of the crystalline nano HfO₂ powder prepared in Embodiment 1 of the present invention;
Figure 5 shows the XRD pattern of low crystalline nano ZrO₂ powder prepared in Example 2 of the present invention;
Figure 6 shows the TEM morphology and diffraction spectrum of the low crystalline nano ZrO₂ powder prepared in Embodiment 2 of the present invention;
Figure 7 shows the XRD pattern of the crystalline nano ZrO₂ powder prepared in Embodiment 2 of the present invention;
Figure 8 shows the TEM morphology and diffraction spectrum of the crystalline nano ZrO₂ powder prepared in Embodiment 2 of the present invention;
Figure 9 is an SEM image of the solidification structure of the initial alloy in Embodiment 9 of the present invention;
Figure 10 shows the energy spectrum and composition detection results of different phases in the solidification structure of the initial alloy in Embodiment 9 of the present invention;
Figure 11 shows a photo of a low crystalline nano HfO₂ suspension colloid aqueous solution doped with Ag nanoparticles prepared in Embodiment 9 of the present invention;

### DETAILED DESCRIPTION

Hereinafter, further explanation will be given on the preparation method of the nano metal oxide and nano metal particles through the following specific embodiments.

### Embodiment 1

This embodiment provides a preparation method for nano HfO₂ and a preparation method for ceramic materials containing HfO₂, comprising the following steps:
Sponge hafnium (with impurity O and H atomic percentage content of 1.4% and 0.8%, respectively) and industrial aluminum ingots (with impurity Si atomic percentage content of 0.4%) were selected according to a molar ratio of 1:3 between Hf and Al. A uniform alloy melt was obtained by melting, and then an initial alloy ribbon with a thickness of ~25µm was prepared form the alloy melt by a rapid solidification method through melt spinning with a copper roller. The initial alloy ribbon composed of Hf, Al, O, H, and Si, and its solidification structure is mainly composed of HfAl₃ intermetallic compounds.

Under normal pressure, react 1g of the initial alloy ribbon prepared above with 50mL of NaOH solution and stir continuously. The concentration of NaOH solution is 10mol/L, and the temperature is its boiling point temperature at atmospheric pressure (~119 °C). During the reaction with a concentrated alkaline solution, the initial alloy produces hydrogen while gradually dissolving in the hot alkaline solution. Within 1 minute, the initial alloy dissolves and a colorless and transparent intermediate solution is obtained.

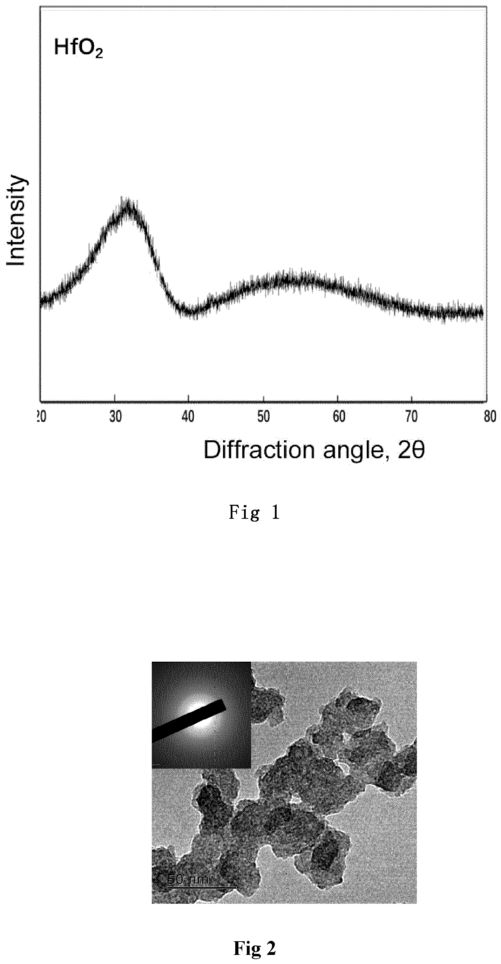

Pour 750mL of constant temperature water into the intermediate solution while stirring; As the alkaline concentration in the intermediate solution decreases below 1mol/L and the temperature drops below 45 °C, solid flocculent substances precipitate from the diluted intermediate solution. Separate the solid flocculent substance from the intermediate solution, and neutralize the residual alkali adsorbed by the solid flocculent substance with a 0.01mol/L dilute hydrochloric acid solution. After separation and drying, low crystalline nano HfO₂ powder with a particle size range of 1.0nm-150nm is obtained. Its XRD spectrum is shown in Figure 1, and its TEM morphology and diffraction spectrum are shown in Figure 2. It should be noted that in this TEM morphology, each aggregate is actually composed of a large number of extremely small flocculent substance.

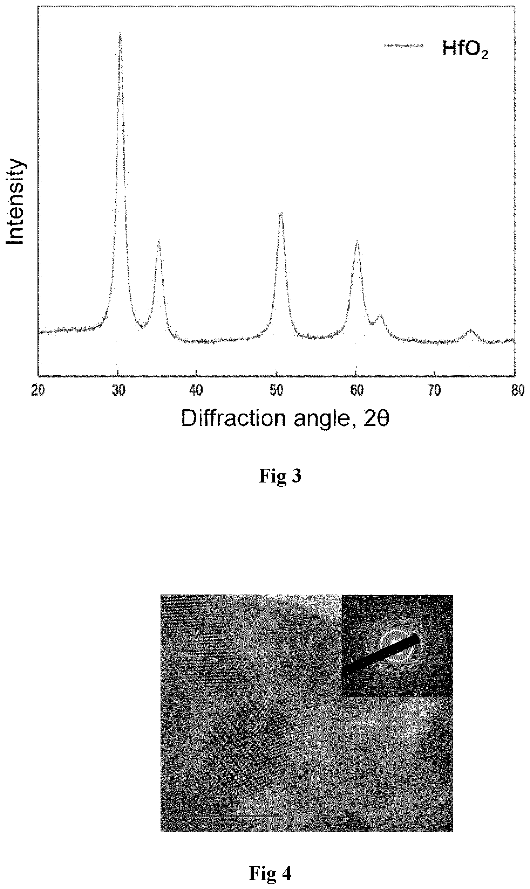

The as-prepared low crystalline nano HfO₂ powder was heat treated at 900 °C for 2 hours to obtain crystalline nano HfO₂ powder with a particle size of 2nm~200nm. The resulting crystalline powder particles were polycrystalline, and the polycrystalline grain size inside the particles was 2nm~15nm. The XRD spectrum is shown in Figure 3, and the TEM morphology and diffraction spectrum are shown in Figure 4.

The prepared low crystalline nano HfO₂ powder and Al₂O₃ powder were uniformly mixed by ball milling with a moisture content of 90:10. The resulting mixed powder was pressed into a green body under a pressure of 30MPa, and then heated to 1400°C and sintered for 30 minutes under pressure to obtain a ceramic material composed of HfO₂ and Al₂O₃.

### Embodiment 2

This embodiment provides a method for preparing nano ZrO₂ powder and a method for preparing ceramic materials containing ZrO₂, comprising the following steps:
Sponge zirconium (with impurity O and H atomic percentage content of 0.75% and 1.1%, respectively) and industrial aluminum ingots (with impurity Si atomic percentage content of 0.4%) were selected according to the molar ratio of Zr to Al at 1:3. A uniform alloy melt was obtained by melting, and then an initial alloy ribbon with a thickness of ~20µm was prepared form the alloy melt by a rapid solidification method through melt spinning with a copper roller. The initial alloy ribbon composed of Zr, Al, O, H, and Si, and its solidification structure is mainly composed of ZrAl₃ intermetallic compounds.

Under normal pressure, react 0.5g of the initial alloy ribbon prepared above with 50mL of NaOH solution and stir continuously. The concentration of NaOH solution is 12mol/L, and the temperature is its boiling point temperature under normal pressure (128°C). During the reaction with a concentrated alkaline solution, the initial alloy produces hydrogen while gradually dissolving in the hot alkaline solution. Within 1 minute, the initial alloy dissolves and a colorless and transparent intermediate solution is obtained.

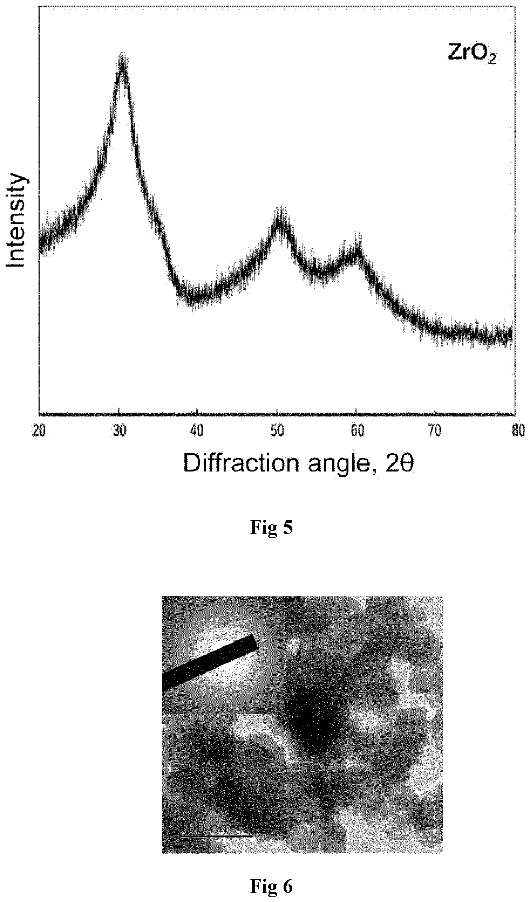

Under stirring, pour 800mL of constant temperature water into the intermediate solution. As the alkali concentration in the intermediate solution decreases to below 1mol/L and the temperature drops to below 45 °C, solid flocculent substances precipitate from the diluted intermediate solution. Separate the solid flocculent substance from the intermediate solution, and neutralize the residual alkali adsorbed by the solid flocculent substance with a 0.01mol/L dilute hydrochloric acid solution. After separation and drying, low crystalline nano ZrO₂ powder with a particle size range of 1.0nm-150nm is obtained. Its XRD spectrum is shown in Figure 5, and its TEM morphology and diffraction spectrum are shown in Figure 6. It should be noted that in this TEM morphology, each aggregate is actually composed of a large number of extremely small flocculent substance.

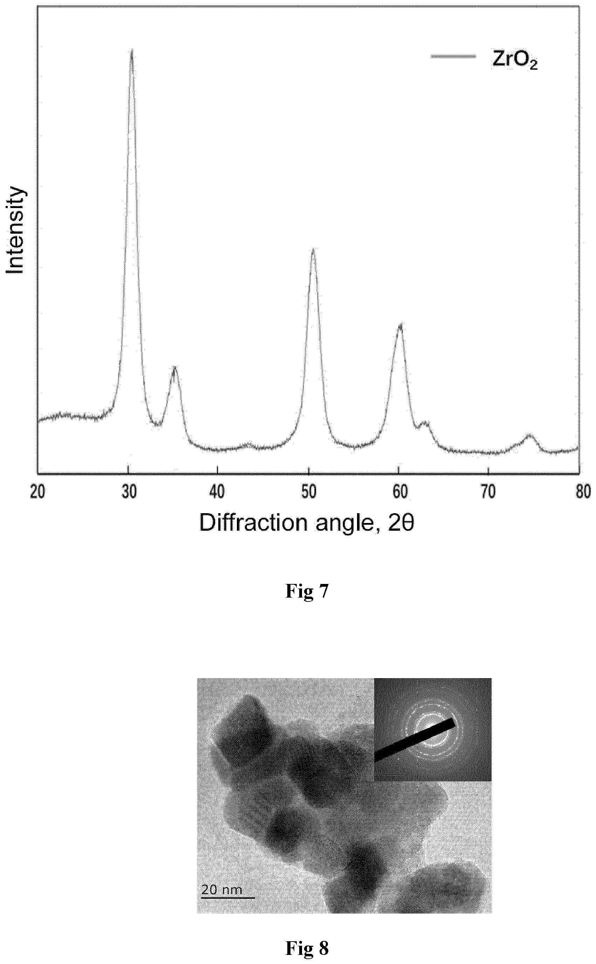

The as-prepared low crystalline nano ZrO₂ powder was heat treated at 900 °C for 2 hours to obtain a crystalline nano ZrO₂ powder with a particle size of 2nm~200nm and a polycrystalline grain size of 2nm~25nm inside the powder (the powder particles are polycrystalline particles). The XRD spectrum is shown in Figure 7, and the TEM morphology and diffraction spectrum are shown in Figure 8.

The prepared low crystalline nano ZrO₂ powder was uniformly mixed with Al₂O₃ powder and MgO powder by ball milling with a molar content of 80:10:10. The resulting mixed powder was pressed into a green body under a pressure of 100MPa, and then heated to 1400 °C for sintering for 30 minutes to obtain a ceramic material composed of ZrO₂, Al₂O₃, and MgO.

### Embodiment 3

This embodiment provides a preparation method for nano ZrO₂ powder, comprising the following steps:
Sponge zirconium (with impurity O and H atomic percentages of 0.75% and 1.1%, respectively) and industrial zinc ingots were selected as raw materials according to the molar ratio of Zr to Zn at 1:2. A uniform alloy melt was obtained by melting, and then an initial alloy ribbon with a thickness of ~25µm was prepared form the alloy melt by a rapid solidification method through melt spinning with a copper roller. The initial alloy ribbon composed of Zr, Zn, O and H, and its solidification structure is mainly composed of ZrZn₂ intermetallic compounds.

Under normal pressure, react 0.5g of the initial alloy ribbon prepared above with 50mL of NaOH solution and stir continuously. The concentration of NaOH solution is 10mol/L, and the temperature is its boiling point temperature at atmospheric pressure (~119 °C). During the reaction with a concentrated alkaline solution, the initial alloy produces hydrogen while dissolving in the hot alkaline solution. Within 1 minute, the initial alloy dissolves and a colorless and transparent intermediate solution is obtained.

Pour 450mL of constant temperature water into the intermediate solution while stirring; As the alkaline concentration in the intermediate solution decreases to 1mol/L and the temperature drops below 45 °C, solid flocculent substances precipitate from the diluted intermediate solution. Separate the solid flocculent substance from the intermediate solution, and neutralize the residual alkali adsorbed by the solid flocculent substance with a dilute hydrochloric acid solution of 0.02mol/L. After separation and drying, low crystalline nano ZrO₂ powder with a particle size range of 1.0nm-150nm is obtained.

The as-prepared low crystalline nano ZrO₂ powder was heat treated at 1000 °C for 2 hours to obtain crystalline nano ZrO₂ powder with a particle size of 2nm~200nm, and the polycrystalline grain size in the powder particles was 2nm~50nm.

### Embodiment 4

This embodiment provides a preparation method for nano ZrO₂ powder, comprising the following steps:
Sponge zirconium (with impurity O and H atomic percentage content of 0.75% and 1.1%, respectively) and industrial aluminum ingots (with impurity Si atomic percentage content of 0.4%) were selected according to the molar ratio of Zr to Al at 1:3, and a uniform alloy melt was obtained by melting. The alloy melt was solidified into alloy ingots with components including Zr, Al, O, H, and Si, and then crushed into the initial alloy powder with an average particle size of below 50 µm. The solidification structure of the initial alloy powder is mainly composed of ZrAl₃ intermetallic compounds.

Under normal pressure, 0.5g of the initial alloy powder prepared above is reacted with 50mL of KOH solution and stirred continuously. The concentration of KOH solution is 10mol/L, and the temperature is its boiling point temperature under normal pressure (125°C). During the reaction with a concentrated alkaline solution, the initial alloy produces hydrogen while dissolving in the hot alkaline solution. Within 2 minutes, the initial alloy dissolves and a colorless and transparent intermediate solution is obtained.

Pour 750mL of constant temperature water into the intermediate solution while stirring; As the alkaline concentration in the intermediate solution decreases below 1mol/L and the temperature drops below 45 °C, solid flocculent substances precipitate from the diluted intermediate solution. Separate the solid flocculent substance from the intermediate solution, and neutralize the residual alkali adsorbed by the solid flocculent substance with a 0.01mol/L dilute hydrochloric acid solution. After separation and drying, low crystalline nano ZrO₂ powder with a particle size range of 1.0nm-150nm is obtained.

The as-prepared low crystalline nano ZrO₂ powder was heat treated at 1000°C for 2 hours to obtain crystalline nano ZrO₂ powder with a particle size of 2nm~200nm, and the polycrystalline grain size in the powder particles was 2nm~50nm.

### Embodiment 5

This embodiment provides a preparation method for nano HfO₂, comprising the following steps:
Sponge hafnium (with impurity O and H atomic percentage content of 1.4% and 0.8%, respectively) and industrial aluminum ingots (with impurity Si atomic percentage content of 0.4%) were selected according to a molar ratio of 1:3 between Hf and Al. A uniform alloy melt was obtained by melting, and then an initial alloy ribbon with a thickness of ~25µm was prepared form the alloy melt by a rapid solidification method through melt spinning with a copper roller. The initial alloy ribbon composed of Hf, Al, O, H, and Si, and its solidification structure is mainly composed of HfAl₃ intermetallic compounds.

Under normal pressure, react 1g of the initial alloy ribbon prepared above with 50mL of KOH solution and stir continuously. The concentration of KOH solution is 15mol/L and the temperature is between 101 °C and 110 °C. During the reaction with a concentrated alkaline solution, the initial alloy produces hydrogen while dissolving in the hot alkaline solution. Within 45 seconds, the initial alloy dissolves and a colorless and transparent intermediate solution is obtained.

Pour 800mL of room temperature water dissolved in 0.5wt.% surfactant PVP into the intermediate solution while stirring; As the alkaline concentration in the intermediate solution decreases below 1mol/L and the temperature drops below 45°C, solid flocculent substances precipitate from the diluted intermediate solution. Separate the solid flocculent substance from the intermediate solution, and neutralize the residual alkali adsorbed by the solid flocculent substance with a dilute hydrochloric acid solution of 0.02mol/L. After separation and drying, low crystalline nano HfO₂ powder with a particle size range of 1.0nm-150nm is obtained.

Heat treat the low crystalline nano HfO₂ powder at 900 °C for 2 hours to obtain crystalline nano HfO₂ powder with a particle size of 2nm~200nm, and the polycrystalline grain size in the powder particles is 2nm~50nm.

### Embodiment 6

This embodiment provides a preparation method for nano HfO₂, comprising the following steps:
Sponge hafnium (with impurity O and H atomic percentage content of 1.4% and 0.8%, respectively) and industrial aluminum ingots (with impurity Si atomic percentage content of 0.4%) were selected according to a molar ratio of 1:3 between Hf and Al. A uniform alloy melt was obtained by melting, and then an initial alloy ribbon with a thickness of ~25µm was prepared form the alloy melt by a rapid solidification method through melt spinning with a copper roller. The initial alloy ribbon composed of Hf, Al, O, H, and Si, and its solidification structure is mainly composed of HfAl₃ intermetallic compounds.

Under normal pressure, react 0.5g of the initial alloy ribbon prepared above with 50mL of KOH solution and stir continuously. The concentration of KOH solution is 15mol/L and the temperature is 75 °C. During the reaction with a concentrated alkaline solution, the initial alloy produces hydrogen while most of it dissolves in the hot alkaline solution.

After 5 minutes, pour 750mL of constant temperature water into the intermediate solution while stirring; As the alkaline concentration in the intermediate solution decreases below 1mol/L and the temperature drops below 40°C, solid flocculent substances precipitate from the diluted intermediate solution. Separate the solid flocculent substance from the intermediate solution, and neutralize the residual alkali adsorbed by the solid flocculent substance with a dilute hydrochloric acid solution of 0.02mol/L. After separation and drying, low crystalline nano HfO₂ powder with a particle size range of 1.0nm-150nm is obtained.

The as-prepared low crystalline nano HfO₂ powder was heat treated at 850 °C for 4 hours to obtain crystalline nano HfO₂ powder with a particle size of 2nm~150nm, and the polycrystalline grain size in the powder particles was 2nm~50nm.

### Embodiment 7

This embodiment provides a preparation method for nano ZrO₂ powder, comprising the following steps:
Sponge zirconium (with impurity O and H atomic percentage content of 0.75% and 1.1%, respectively) and industrial aluminum ingots (with impurity Si atomic percentage content of 0.4%) were selected according to the molar ratio of Zr and Al at 1:2. A uniform alloy melt was obtained by melting, and then an initial alloy ribbon with a thickness of ~25µm was prepared form the alloy melt by a rapid solidification method through melt spinning with a copper roller. The initial alloy ribbon composed of Zr, Al, O, H, and Si, and its solidification structure is mainly composed of ZrAl₂ intermetallic compounds.

Under normal pressure, react 0.5g of the initial alloy ribbon prepared above with 50mL of NaOH solution and stir continuously. The concentration of NaOH solution is 15mol/L and the temperature is between 101 °C and 110 °C. During the reaction with a concentrated alkaline solution, the initial alloy produces hydrogen while dissolving in the hot alkaline solution. Within 2 minutes, the initial alloy dissolves and a colorless and transparent intermediate solution is obtained.

Under stirring, pour 750mL of room temperature water containing 0.5wt.% surfactant CTAB into the intermediate solution; As the alkaline concentration in the intermediate solution decreases below 1mol/L and the temperature drops below 45°C, solid flocculent substances precipitate from the diluted intermediate solution. Separate the solid flocculent substance from the intermediate solution, and neutralize the residual alkali adsorbed by the solid flocculent substance with a dilute hydrochloric acid solution of 0.02mol/L. After separation and drying, low crystalline nano ZrO₂ powder with a particle size range of 1.0nm-150nm is obtained.

The as-prepared low crystalline nano ZrO₂ powder was heat treated at 1000°C for 2hours to obtain crystalline nano ZrO₂ powder with a particle size of 2nm~200nm, and the polycrystalline grain size in the powder particles was 2nm~50nm.

### Embodiment 8

This embodiment provides a preparation method for nano (Hf-Zr)O₂ and a preparation method for ceramic materials containing (Hf-Zr)O₂, comprising the following steps:
Sponge zirconium (with impurity O and H atomic percentage content of 0.75% and 1.1%, respectively), Sponge hafnium (with impurity O and H atomic percentage content of 1.4% and 0.8%, respectively), and industrial aluminum ingots (with impurity Si atomic percentage content of 0.4%) were selected according to the molar ratio of Zr, Hf and Al at 0.5:0.5:3. A uniform alloy melt was obtained by melting, and then an initial alloy ribbon with a thickness of ~25µm was prepared form the alloy melt by a rapid solidification method through melt spinning with a copper roller. The initial alloy ribbon composed of Zr, Hf, Al, O, H, and Si, and its solidification structure is mainly composed of (Hf-Zr)Al₃ intermetallic compounds.

Under normal pressure, react 0.75g of the initial alloy ribbon prepared above with 50mL of NaOH solution and stir continuously. The concentration of NaOH solution is 10mol/L, and the temperature is its boiling point temperature at atmospheric pressure (~119 °C). During the reaction with a concentrated alkaline solution, the initial alloy produces hydrogen while dissolving in the hot alkaline solution. Within 1 minutes, the initial alloy dissolves and a colorless and transparent intermediate solution is obtained.

Pour 500mL of constant temperature water into the intermediate solution while stirring; As the alkaline concentration in the intermediate solution decreases below 1mol/L and the temperature drops below 45 °C, solid flocculent substances precipitate from the diluted intermediate solution. Separate the solid flocculent substance from the intermediate solution, and neutralize the residual alkali adsorbed by the solid flocculent substance with a dilute hydrochloric acid solution of 0.02mol/L. After separation and drying, low crystalline nano (Hf-Zr)O₂ powder with a particle size range of 1.0nm-150nm is obtained.

The prepared low crystalline nano (Hf-Zr)O₂ powder was heat treated at 850 °C for 4 hours to obtain crystalline nano (Hf-Zr)O₂ powder with a particle size of 2nm~200nm, and the polycrystalline grain size in the powder particles was 2nm~50nm.

The prepared low crystalline nano (Hf-Zr)O₂ powder and Al₂O₃ powder were uniformly mixed by ball milling with a molar content of 30:70. The resulting mixed powder was pressed into a green body under a pressure of 30MPa, and then heated to 1400 °C under pressure for sintering for 30 minutes to obtain a ceramic material composed of (Hf-Zr)O₂ and Al₂O₃.

### Embodiment 9

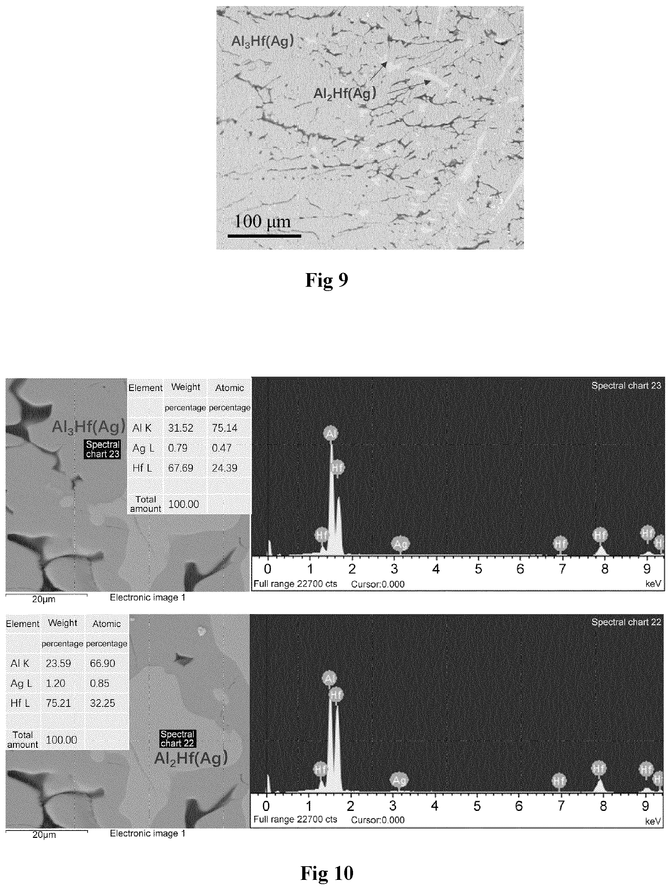

This embodiment provides a method for preparing Ag nanoparticles doped nano HfO₂ and Ag nanoparticles , comprising the following steps:
Sponge hafnium and industrial aluminum ingot raw materials were selected according to the molar ratio of Hf to Al at 26:74, and Ag raw materials were added at the same time, with Ag content accounting for 0.75% of the total atomic percentage of Hf, Al, and Ag. Melt the above raw materials to obtain a uniform alloy melt, further solidify the alloy melt into an initial alloy ingot composed of Hf, Al, Ag, and then break it into initial alloy powder
with an average particle size not exceeding 100µm. The solidification structure of the initial alloy ingot is shown in Figure 9. Under SEM backscattering, it is mainly composed of Al₃Hf (Ag) phase with gray contrast and Al₂Hf (Ag) intermetallic compound with a small amount of gray white contrast and Ag solution, as shown in the energy spectrum in Figure 10. Due to the small Ag content in the initial alloy ingot, there is an error in the energy spectrum detection. Therefore, the Ag content detected in Figure 10 is slightly lower than the actual added Ag.

Under normal pressure, add 1g of the initial alloy powder prepared above to 50ml of NaOH aqueous solution and stir continuously. The concentration of NaOH solution is 10mol/L, and the temperature is its boiling point temperature under normal pressure (119°C). Within 2 minutes, both Hf and Al are dissolved in an alkaline solution, forming an intermediate solution; At the same time, the Ag element in the initial alloy diffuses and aggregates to generate Ag nanoparticles, thereby obtaining an intermediate solution containing Ag nanoparticles;

After 1 minute, under stirring, 500ml of constant temperature water was quickly poured into the intermediate solution containing Ag nanoparticles in one go. The alkaline concentration in the solution decreased to below 1mol/L within 2 seconds, and the temperature decreased to below 45 °C. The solid flocculent substance containing Hf gradually precipitated from the reduced alkaline solution and compounded with the Ag nanoparticles present in the original solution;

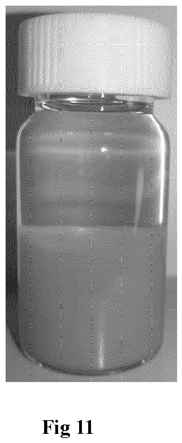

Separate the solid flocculent material and Ag nanoparticles from the diluted solution, clean and dry to obtain low crystalline nano HfO₂ containing doped Ag nanoparticles; Among them, the particle size range of Ag nanoparticles is 2nm~30nm; The particle size of low crystalline nano HfO₂ ranges from 1nm to 150nm; The binding mode between Ag nanoparticles and low crystalline nano HfO₂ is mainly through physical adsorption; The photo of the suspension colloid solution of low crystalline nano HfO₂ doped with Ag nanoparticles after dispersion in water is shown in Figure 11. Due to the influence of Ag nanoparticles, the color of the flocculent low crystalline nano HfO₂ is not pure white, but appears grayish white; And the Ag nanoparticles are evenly dispersed.

Heat treat the low crystalline nano HfO₂ containing doped Ag nanoparticles at 900 °C for 4 hours to obtain crystalline nano HfO₂ containing doped Ag nanoparticles. The particle size range of Ag nanoparticles is 3nm~50nm, and the particle size of crystalline nano HfO₂ is 2nm~200nm.

Perform solid-liquid separation on the intermediate solution containing Ag nanoparticles mentioned above, collect Ag nanoparticles, remove residue from the intermediate solution, and obtain Ag nanoparticles with a particle size of 3nm~150nm.

React the low crystalline nano HfO₂ doped with Ag nanoparticles without heat treatment with a 0.5mol/L hydrochloric acid solution for 5 minutes, dissolve and remove the low crystalline nano HfO₂, and clean it through solid-liquid separation to obtain Ag nanoparticles with a particle size range of 3nm~150nm.

Mix the low crystallin nano HfO₂ powder doped with Ag nanoparticles without heat treatment with Al₂O₃ powder by ball milling with a ratio of 50:50. The obtained mixed powder is pressed into a green body under a pressure of 50MPa, and then heated to 1450 °C and sintered for 30 minutes to obtain a bactericidal ceramic material containing Ag, HfO₂, and Al₂O₃.

### Embodiment 10

This embodiment provides a method for preparing Ag nanoparticles doped nano HfO₂ and Ag nanoparticles , comprising the following steps:
Sponge hafnium and industrial aluminum ingot raw materials were selected according to the molar ratio of Hf to Al at 1:2, and Ag raw materials were added at the same time, with the added Ag content accounting for 1% of the total atomic percentage of Hf, Al, and Ag. Melt the above raw materials to obtain a uniform alloy melt, and then an initial alloy ribbon with a thickness of ~25µm was prepared form the alloy melt by a rapid solidification method through melt spinning with a copper roller. The initial alloy ribbon composed of Hf, Al and Ag, and its phase composition is mainly composed of HfAl₂ intermetallic compounds with Ag elements in solid solution.

Under normal pressure, add 1g of the initial alloy powder prepared above to 50ml of NaOH aqueous solution and stir continuously. The concentration of NaOH solution is 15mol/L, and the temperature is its boiling point temperature under normal pressure (140°C). Within 1 minute, both Hf and Al are dissolved in an alkaline solution, forming an intermediate solution; At the same time, the Ag element in the initial alloy diffuses and aggregates to generate Ag nanoparticles, thereby obtaining an intermediate solution containing Ag nanoparticles;
After 1 minute, while stirring, quickly pour 1000ml of constant temperature water into an intermediate solution containing Ag nanoparticles in one go. The alkali concentration in the solution decreases to below 1mol/L within 2 seconds, and the temperature drops to below 45°C. The solid flocculent substance containing Hf separates from the reduced alkali solution and mixes with the Ag nanoparticles present in the original solution;
Separate the solid flocculent substances and Ag nanoparticles in the diluted solution from the solution, and after cleaning and drying, obtain nano HfO₂ containing doped Ag nanoparticles; Among them, the particle size range of Ag nanoparticles is 2nm~30nm; The crystal form of nano HfO₂ is mainly amorphous, with a particle size of 1nm~150nm; The binding mode between Ag nanoparticles and nano HfO₂ is mainly physical adsorption binding;
Heat treat the above-mentioned nano oxide-Hafnium containing doped Ag nanoparticles at 900°C for 4 hours to obtain crystalline nano HfO₂ containing doped Ag nanoparticles. The particle size range of Ag nanoparticles is 3nm~50nm, and the particle size of crystalline nano HfO₂ is 2nm~150nm.

Perform solid-liquid separation on the intermediate solution containing Ag nanoparticles mentioned above, collect Ag nanoparticles, and wash them with a dilute acid solution to obtain Ag nanoparticles with a particle size of 3nm~150nm.

The amorphous nano HfO₂ doped with Ag nanoparticles without heat treatment was reacted with a 0.5mol/L hydrochloric acid solution for 5 minutes to dissolve and remove the amorphous nano HfO₂. After solid-liquid separation and cleaning, Ag nanoparticles that can be freely dispersed were obtained, with a particle size range of 3nm to 150nm.

### Embodiment 11

This embodiment provides a method for preparing Au-Ag nanoparticles doped nano ZrO₂ and Au-Ag nanoparticles , comprising the following steps:
Sponge zirconium and industrial aluminum ingot raw materials were selected according to a molar ratio of 1:3 between Zr and Al, and Ag and Au raw materials were added simultaneously. The content of Ag and Au accounted for 0.5% of the total atomic percentage of Zr, Al, Ag, and Au. Melt the above raw materials to obtain a uniform alloy melt, and then an initial alloy ribbon with a thickness of ~25µm was prepared form the alloy melt by a rapid solidification method through melt spinning with a copper roller. The initial alloy ribbon composed of Zr, Al, Ag, and Au, and its phase composition is mainly composed of ZrAl₃ intermetallic compounds with Ag-Au elements in solid solution.

Under normal pressure, add 0.5g of the initial alloy ribbon prepared above to 50ml of KOH aqueous solution
and stir continuously. The concentration of KOH solution is 10mol/L, and the temperature is its boiling point temperature under normal pressure (125°C). Within 1 minute, both Zr and Al dissolve in alkaline solution, forming an intermediate solution; At the same time, the Ag and Au elements in the initial alloy diffuse and aggregate to form freely dispersed Ag-Au nanoparticles, thereby obtaining an intermediate solution containing Ag-Au nanoparticles;
After 1 minute, while stirring, quickly pour 750ml of constant temperature water into an intermediate solution containing Ag-Au nanoparticles in one go. The alkaline concentration in the solution decreases to below 1mol/L within 2 seconds, and the temperature drops to below 45 °C. The solid flocculent substance containing Zr precipitates from the alkaline solution after the concentration is reduced and uniformly combines with the Ag-Au nanoparticles present in the original solution;
Separate the solid flocculent material and Ag-Au nanoparticles from the diluted solution, clean and dry them to obtain low crystalline nano ZrO₂ containing doped Ag-Au nanoparticles; Among them, the particle size range of Ag-Au nanoparticles is 2nm~30nm; The crystal form of low crystalline nano ZrO₂ is mainly amorphous, with a particle size of 1nm~150nm; The binding mode between Ag-Au nanoparticles and nano ZrO₂ is mainly through physical adsorption;
Heat treat the low crystalline nano ZrO₂ containing doped Ag-Au nanoparticles at 900 °C for 4 hours to obtain crystalline nano ZrO₂ containing doped Ag-Au nanoparticles. The particle size range of Ag-Au nanoparticles is 3nm~50nm, and the particle size of crystalline nano ZrO₂ is 3nm~150nm.

Perform solid-liquid separation on the intermediate solution containing Ag-Au nanoparticles mentioned above, collect Ag-Au nanoparticles, and wash them with a dilute acid solution to obtain Ag-Au nanoparticles with a particle size of 2nm~150nm.

React the low crystalline state nano ZrO₂ doped with Ag-Au nanoparticles without heat treatment with a 0.5mol/L hydrochloric acid aqueous solution for 5 minutes, dissolve and remove the low crystalline state nano ZrO₂, and after solid-liquid separation and cleaning, obtain Ag-Au nanoparticles that can be freely dispersed, with particle sizes ranging from 3nm to 150nm.

### Embodiment 12

This embodiment provides a method for preparing Au nanoparticles doped nano ZrO₂ and Au nanoparticles , comprising the following steps:
Sponge zirconium and industrial zinc ingot raw materials were selected according to the molar ratio of Zr to Zn at 1:3, and Au raw materials were added at the same time, with Au content accounting for 0.5% of the total atomic percentage of Zr, Zn, and Au. Melt the above raw materials to obtain a uniform alloy melt, then solidify the alloy melt into ingots containing Zr, Zn, and Au, and further break them into initial alloy coarse powder with an average particle size of about 1mm. The phase composition is mainly composed of ZrZn₃ intermetallic compounds with Au elements dissolved in the solid solution.

Under normal pressure, add 1g of the initial alloy coarse powder prepared above to 50ml of a KOH aqueous solution and stir continuously. The concentration of KOH solution is 10mol/L, and the temperature is its boiling point temperature under normal pressure (125°C).

Within 10 minutes, the initial alloy coarse powder reaction is consumed, and both Zr and Zn are dissolved in an alkaline solution, forming an intermediate solution; At the same time, the Au element in the initial alloy diffuses and aggregates to form Au nanoparticles, resulting in an intermediate solution containing Au nanoparticles;
In the stirring state, 750ml of constant temperature water is quickly poured into the intermediate solution containing Au nanoparticles in one go. The alkaline concentration in the solution decreases to below 1mol/L within 2 seconds, and the temperature drops to below 45 °C. The solid flocculent substance containing Zr precipitates from the reduced alkaline solution and uniformly combines with the Au nanoparticles present in the original solution;
Separate the solid flocculent material and Au nanoparticles from the diluted solution, clean and dry to obtain low crystalline nano ZrO₂ containing doped Au nanoparticles; Among them, the particle size range of Au nanoparticles is 2nm~30nm; The crystal structure of nano ZrO₂ is mainly amorphous, with a particle size of 1nm~150nm; The binding mode between Au nanoparticles and low crystalline nano ZrO₂ is mainly through physical adsorption;
Heat treat the low crystalline nano ZrO₂ containing doped Au nanoparticles at 900 °C for 4 hours to obtain crystalline nano ZrO₂ containing doped Au nanoparticles; Among them, the particle size range of Au nanoparticles is 3nm~50nm, and the particle size of crystalline nano ZrO₂ is 3nm~150nm.

Perform solid-liquid separation on the intermediate solution containing Au nanoparticles mentioned above, collect Au nanoparticles, and wash them with a dilute acid solution to obtain Au nanoparticles with a particle size of 2nm~75nm.

The amorphous nano ZrO₂ doped with Au nanoparticles without heat treatment was reacted with 0.5mol/L hydrochloric acid solution for 5 minutes to dissolve and remove low crystalline nano ZrO₂. After solid-liquid separation and cleaning, freely dispersed Au nanoparticles were obtained, with a particle size range of 3nm~75nm.

The technical features of the above examples may be combined arbitrarily. For clarity of descriptions, all of the possible combinations of the technical features of the above examples are not described. However, as long as the combinations of these technical features are not contradictory, they should be considered as within the scope of protection of the present disclosure.

The above examples are merely several implementations of the present disclosure. Although the descriptions of the examples are relatively specific, they cannot be understood as limiting of the scope of protection present disclosure. It should be pointed out that several variations and improvements made by persons of ordinary skills in the art without departing from the idea of the present disclosure shall all fall within the scope of protection of the present disclosure. Therefore, the scope of protection of the present disclosure shall be indicated by the appended claims.

## Claims

1. A preparation method for nano ZrO₂/HfO₂, comprising the following steps:
Step 1, providing an initial alloy comprising three types of elements: M, T, and A; wherein the M element comprises at least one of Zr, Hf; the T element comprises at least one of Al, Zn; the A element comprises at least one of O, H, Na, K, Mg, Ca, Li, Si; and the phase composition of the initial alloy mainly comprises a M-T intermetallic compound;
Step 2, react the initial alloy with an alkaline solution with a temperature of *T*₁ and a concentration of the first concentration, so that the initial alloy is dissolved in the alkaline solution to obtain an intermediate solution, where *T*₁ ≥ 75 °C;
Step 3, reduce the alkaline concentration of the intermediate solution described in step 2 to below the second concentration, or lower the temperature of the intermediate solution described in step 2 to below *T*₂ temperature, or simultaneously reduce the alkaline concentration and temperature of the intermediate solution described in step 2 to below the second concentration and below *T*₂ temperature, so that solid products containing M can precipitate from the intermediate solution after the concentration or (and) temperature is reduced; the second concentration is lower than the first concentration, and the temperature of *T*₂ is lower than that of *T*₁;
Step 4, collect the solid products containing M to obtain products mainly composed of nano ZrO₂/HfO₂.

2. The preparation method for nano ZrO₂/HfO₂ according to claim 1, wherein the elemental composition of the initial alloy is mainly AₓT_{y}M_{z}, where x, y, and z are the atomic percentage contents of corresponding elements, and 0<x ≤ 15%, 45% ≤ y<95%, and 5% ≤ z<55%.

3. The preparation method for nano ZrO₂/HfO₂ according to claim 1, wherein 75°C≤*T*₁≤*T*_{f solution}, and the *T_{f solution}* is the boiling point temperature of the solution of the alkali involved in the reaction at ambient pressure.

4. The preparation method for nano ZrO₂/HfO₂ according to claim 1, wherein during the reaction process between the initial alloy and the first concentration of alkaline solution, the reaction interface advances inward from the initial alloy surface is greater than 5µm/min.

5. The preparation method for nano ZrO₂/HfO₂ according to claim 1, wherein the method of reducing the alkaline concentration of the intermediate solution in step 2 includes diluting with a solvent, and the diluting solvent contains at least one of the surfactants or modifiers.

6. The preparation method for nano ZrO₂/HfO₂ according to claim 1, wherein the particle size of the nano ZrO₂/HfO₂ ranges from 1.0nm to 150nm.

7. The preparation method for nano ZrO₂/HfO₂ according to claim 1, wherein the nano ZrO₂/HfO₂ is mainly low crystalline nano ZrO₂/HfO₂.

8. A preparation method for crystalline nano ZrO₂/HfO₂, wherein the crystalline nano ZrO₂/HfO₂ mainly composed of crystalline nano ZrO₂/HfO₂ was obtained by heating treat the product described in step 4 according to any one of the claim 1 to 7.

9. An application of nano ZrO₂/HfO₂ prepared by the preparation method according to claim 1 to 8 in ceramic materials, composite materials, high-performance electronic devices, and semiconductor devices.

10. A preparation method for a ceramic material containing nano ZrO₂/HfO₂, comprising the following steps:
Step S1, prepare a uniformly mixed powder, wherein the mixed powder comprises nano ZrO₂/HfO₂ prepared by the above preparation method and an external powder; among them, the molar percentage content of the nano ZrO₂/HfO₂ in the mixed powder is *V*₁, and the molar percentage content of the external powder in the mixed powder is *V*₂, and the external powder comprises at least one of Al₂O₃, CaO, MgO, SiO₂, B₂O₃, BeO, TiC, and SiC; among them, 1%≤*V*₁≤100%, 0≤*V*₂≤99%;
Step S2, press the mixed powder into a green body, and then calcine it at high temperature to obtain a ceramic material containing nano ZrO₂/HfO₂.

11. a preparation method for metal nanoparticle doped nano ZrO₂/HfO₂, comprising the following steps:
Step (1), provide an initial alloy, which includes three types of elements: M, T, and D; Among them, M contains at least one of Zr and Hf; T contains at least one of Al and Zn; D contains at least one of Ru, Rh, Pd, Ag, Re, Os, Ir, Pt, Au and Cu; The phase composition of the initial alloy is mainly composed of M-T intermetallic compounds with D elements in solid solution;
Step (2), react the initial alloy with an alkaline solution at a temperature of *T*₁ and a concentration of the first concentration, so that the M and T elements in the initial alloy are dissolved in the alkaline solution; At the same time, the solid solution of D element atoms in the original M-T intermetallic compound re-aggregates to form nanoparticles mainly composed of D elements, thereby obtaining an intermediate solution containing D nanoparticles; Among them, *T*₁ ≥75°C;
Step (3), reduce the alkaline concentration of the intermediate solution described in Step (2) to below the second concentration, so that the solid substance containing M precipitates from the reduced concentration of the intermediate solution and simultaneously combines with D nanoparticles;
Step (4), collect the composite product of solid material containing M and D nanoparticles, to obtain the nano ZrO₂/HfO₂ doped with D nanoparticles.

12. The preparation method for metal nanoparticle doped nano ZrO₂/HfO₂ according to claim 11, wherein the elemental composition of the initial alloy is mainly AₓT_{y}M_{z}, where x, y, and z are the atomic percentage contents of corresponding elements, and 0<x ≤ 15%, 45% ≤ y<95%, and 5% ≤ z<55%.

13. The preparation method for metal nanoparticle doped nano ZrO₂/HfO₂ according to claim 11, wherein 75°C≤*T*₁≤*T*_{f solution}; and the *T_{f solution}* is the boiling point temperature of the solution of the alkali involved in the reaction at ambient pressure.

14. The preparation method for metal nanoparticle doped nano ZrO₂/HfO₂ according to claim 11, wherein during the reaction process between the initial alloy and the first concentration of alkaline solution, the reaction interface advances inward from the initial alloy surface is greater than 5µm/min.

15. The preparation method for metal nanoparticle doped nano ZrO₂/HfO₂ according to claim 11, wherein the method of reducing the alkaline concentration of the intermediate solution in Step (2) includes diluting with a solvent, and the diluting solvent contains at least one of the surfactants or modifiers.

16. A preparation method for metal nanoparticle doped crystalline nano ZrO₂/HfO₂, wherein the metal nanoparticle doped crystalline nano ZrO₂/HfO₂ was obtained by heating treat the product according to any one of claim 11-15.

17. A method for preparing metal nanoparticles, wherein the intermediate solution containing D nanoparticles obtained in Step (2) according to any one of claim 11-14 is solid-liquid separated, then the D nanoparticles were obtained.

18. A method for preparing metal nanoparticles, wherein the nano ZrO₂/HfO₂ doped with D nanoparticles obtained in Step (4) according to any one of claim 11-14 is dissolved through acid solution reaction, while retaining the D nanoparticles; After solid-liquid separation, the D nanoparticles were obtained.

19. An application of D nanoparticles doped nano ZrO₂/HfO₂, or D nanoparticles doped crystalline nano ZrO₂/HfO₂, or D nanoparticles according to any one of claim 11-18 in polymer based nanocomposites, catalytic materials, ceramic materials, composite materials, high-performance electronic devices, sewage degradation materials, bactericidal coatings, and anti-corrosion coatings.

20. A preparation method for an Ag containing bactericidal ceramic material, comprising the following steps:
adding the nano ZrO₂/HfO₂ doped with D nanoparticles or the crystalline nano ZrO₂/HfO₂ doped with D nanoparticles prepared by the preparation method according to any one of claim 11-16 as necessary components into the raw ceramic powder, and the main component of the D nanoparticles is Ag element; After preparing the blank and high-temperature calcination, the bactericidal ceramic material containing Ag is obtained.
